(19) **Europäisches Patentamt**
**European Patent Office**
**Office européen des brevets**

(11) **EP 2 789 973 B1**

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(51) Int Cl.:
*G01C 15/00* (2006.01)     *G02B 26/08* (2006.01)
*G02B 27/64* (2006.01)

(21) Anmeldenummer: **13163585.6**

(22) Anmeldetag: **12.04.2013**

(54) **Rotationslaser mit durch Aktuatoren gezielt verformbarer Linse**

Rotation laser with lens that can be intentionally deformed by actuators

Laser à rotation avec lentille pouvant être déformée intentionnellement par des actionneurs

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.10.2014 Patentblatt 2014/42**

(73) Patentinhaber: **Hexagon Technology Center GmbH**
**9435 Heerbrugg (CH)**

(72) Erfinder: **Dumoulin, Charles Leopold Elisabeth**
**CH-9436 Balgach (CH)**

(74) Vertreter: **Kaminski Harmann**
**Patentanwälte AG**
**Landstrasse 124**
**9490 Vaduz (LI)**

(56) Entgegenhaltungen:
**WO-A1-2008/095923     US-B1- 6 253 457**

**Beschreibung**

Die Erfindung betrifft einen Rotationslaser nach Anspruch 1, ein System nach Anspuch 10 sowie ein Verfahren nach Anspruch 11. Rotationslaser, die zur Markierung von Punkten und zur Festlegung von Referenzebenen auf Baustellen oder von Referenzlinien an Objekten wie z.B. Wänden, Böden oder Decken verwendet werden, finden seit vielen Jahren im industriellen Bereich und im Bauwesen Anwendung. Mit ihnen lassen sich horizontale, vertikale oder auch definiert geneigte Ebenen projizieren, welche eine Hilfestellung zur Orientierung oder Positionierung an Objekten bieten. Rotationslaser weisen in der Regel eine Sendeeinheit auf, die eine Laserlichtquelle zur Erzeugung eines Laserstrahls umfasst. Der Rotationslaser verfügt weiterhin über ein optisches System aus einer oder mehreren Linsen sowie ein um eine Rotationsachse drehbares Umlenkmittel zur gerichteten Aussendung des Laserstrahls. Wird ein rotierender Laserstrahl im sichtbaren Wellenlängenbereich ausgesendet und trifft dieser Laserstrahl auf ein Objekt, so ist dort eine Referenzlinie als Basis für weitere Massnahmen sichtbar. Damit die Referenzebene oder an einer Wand eben die Referenzlinie wirklich den gewünschten Neigungswinkel im Raum hat bzw. wirklich horizontal oder vertikal ist, muss zum einen der Rotationslaser lotrecht im Raum aufgestellt sein (nivelliert) und zum Anderen müssen die optische Achse des emittierten Laserstrahls, die optische Achse des Umlenkmittels (insbesondere wenn das Umlenkmittel, wie allgemein üblich ein Pentaprisma ist) und die mechanische Rotationsachse des Umlenkmittels koaxial zueinander sein. Ist beispielsweise die Laserlichtquelle (meist eine Laserdiode) nicht genau positioniert und weist eine Schiefstellung und/oder einen Versatz auf, so ist die optische Achse des Laserstrahls nicht koaxial mit der optischen Achse und der mechanischen Drehachse des Umlenkmittels und es resultiert ein Ausrichtungsfehler. Steht das Gerät nicht lotrecht resultiert ein Nivellierungsfehler.

Aus dem Stand der Technik bekannte Rotationslaser sind üblicherweise sich selbst ausgleichende Rotationslaser, d.h. sie verfügen über Mittel zur initialen, horizontalen oder vertikalen Ausrichtung des Laserstrahls und damit der durch den Laserstrahl erzeugten Laserebene. Ein Rotationslaser kann dazu beispielsweise über eine Nivellierautomatik verfügen, d.h. das Gerät erkennt bei Inbetriebnahme selbständig seine Lage relativ zur horizontalen oder vertikalen Ebene und gleicht die ermittelte Abweichung des Laserstrahls von der horizontalen und/oder vertikalen Ebene aus. Die Lageabweichungen des Gerätes können z.B. mittels Neigungssensoren erfasst werden und eine Ausrichtung des Laserstrahls kann dann mit Hilfe von motorbetriebenen oder hydraulischen Neigungskompensatoren erfolgen. Die Ausrichtung des Laserstrahls kann dabei beispielsweise durch Verstellen der Neigung des Gerätekörpers, also durch einen Kippmechanismus, der sich im oder aussen am Gerät oder an einer Gerätehalterung befindet, oder durch mechanisches Verstellen von optischen Komponenten der Sendeeinheit erfolgen. Nachteilig ist, dass die Motoren der Neigungskompensatoren einen hohen Energieverbrauch sowie ein hohes Eigengewicht haben und darüber hinaus relativ lange für die Ausrichtung des Laserstrahls benötigen. Nachteilig ist weiterhin, dass die Selbstnivellierung typischerweise nur für Lageabweichungen von bis zu etwa +/-5° von der horizontalen und/oder vertikalen Ebene möglich ist.

Das Dokument US 6,253,457 offenbart ein Vermessungsgerät, insbesondere einen Rotationslaser, mit einem optischen System aus mehreren Linsen zur Korrektur des Austrittswinkels eines Laserstrahls, wobei der zu korrigierende Austrittswinkel bedingt ist durch eine geneigte Stellung des Vermessungsgerätes im Raum. Die Korrektur des Austrittwinkels kann dabei beispielsweise durch Verschieben einer oder mehrerer Linsen entlang der optischen Achse des optischen Systems erfolgen oder durch Fokusänderung einer Linse mit veränderlichem Fokus im optischen System. Bei der Linse mit veränderlichem Fokus kann es sich unter anderem um eine Flüssiglinse handeln.

Neben der Selbstnivellierung des Rotationslasers zur Kompensation von Lageabweichungen des Gerätes, oder anders gesagt, zur Kompensation von Winkelabweichungen der optischen Achse der Sendeeinheit von der horizontalen und/oder vertikalen Ebene, kann es zusätzlich erforderlich sein, weitere Ungenauigkeiten des Gerätes zu kompensieren, die unter anderem durch Temperatureinflüsse oder Erschütterungen zu einer Dejustierung einer oder mehrerer Komponenten der Sendeeinheit, z.B. der Laserlichtquelle und/oder einer oder mehrerer Linsen des optischen Systems verursacht werden können. Gemäss Stand der Technik können solche Abweichungen z.B. durch mechanische Verschiebung einer oder mehrerer Linsen des optischen Systems kompensiert werden, wie beispielsweise in US 5,825,555 beschrieben. Nachteilig ist allerdings, dass eine solche mechanische Verschiebung von Linsen relativ langsam ist und durch die dazu notwendigen Stellmotoren das Gewicht des Rotationslasers relativ gross ist. Darüber hinaus steigt die Wartungsanfälligkeit mit der Anzahl der beweglichen Komponenten im Rotationslaser.

Der Erfindung liegt die Aufgabe zugrunde, einen verbesserten Rotationslaser bereitzustellen, der die genannten Nachteile vermindert oder behebt. Insbesondere ist es die Aufgabe der vorliegenden Erfindung, einen verbesserten Rotationslaser bereitzustellen, der einfacher ist in seiner Konstruktion und daher einfacher und kostengünstiger in seiner Herstellung. Ausserdem soll er leicht handhabbar und dadurch benutzerfreundlich sein.

Zudem werden zusätzliche Funktionen realisiert mit denen der Anwendungsberecheich erweitert wird.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Der Rotationslaser weist eine Laserlichtquelle, z.B. eine Laserdiode auf, die Bestandteil einer Sendeeinheit ist und zur Erzeugung eines sichtbaren oder eines mittels eines Detektors nachweisbaren Laserstrahls dient. Der Rotationslaser umfasst weiterhin ein um eine Rotationsachse drehbares Umlenkmittel, z.B. ein Pentaprisma, zur gerichteten Aussendung des Laserstrahls sowie ein optisches System aus einer oder mehreren Linsen, die zur Manipulation des Laserstrahls dienen, wobei zumindest eine dieser Linsen eine durch Aktuatoren gezielt verformbare Linse ist. Unter dem Begriff Sendeeinheit ist ein mechanisches Bauteil zu verstehen, welches sich von der Laserlichtquelle bis zum Umlenkmittel erstreckt, wobei die Laserlichtquelle, wie gesagt als Bestandteil der Sendeeinheit zu betrachten ist. Unter dem Begriff durch Aktuatoren gezielt verformbare Linse ist ein optisches Element mit gezielt ansteuerbarer Verformbarkeit des optisch wirksamen Linsenkörpers zu verstehen, wobei es sich bei der durch Aktuatoren gezielt verformbaren Linse um eine Polymerlinse oder eine handelsübliche Flüssiglinse handelt, wie sie beispielsweise von der Firma Varioptic S.A. hergestellt wird. Erfindungsgemäss weist der Rotationslaser eine Steuereinheit zur Manipulation der wenigstens einen durch Aktuatoren gezielt verformbaren Linse auf, wobei die wenigstens eine durch Aktuatoren gezielt verformbare Linse mindestens drei entlang ihres Umfangs verteilt angeordnete Aktuatoren aufweist, die von der Steuereinheit derart ansteuerbar sind, dass der Laserstrahl im Raum gezielt ausrichtbar ist und/oder die Divergenz des Laserstrahls einstellbar ist.

Ist die durch Aktuatoren gezielt verformbare Linse eine Flüssiglinse, so umfasst sie beispielsweise eine optisch transparente Kammer mit einem ersten und einem zweiten optisch transparenten Medium, wobei das erste und das zweite Medium nicht mischbar sind und unterschiedliche optische Brechzahlen aufweisen. Bei den Medien kann es sich beispielsweise um eine wässrige, alkoholische oder ölige Flüssigkeit, ein Polymer in flüssigem Zustand, ein Silikon oder Silikonöl handeln. Zwischen dem ersten und dem zweiten Medium liegt eine Grenzfläche vor, wobei die Grenzfläche durch die Aktuatoren verformbar ist, so dass die optischen Brechungseigenschaften der Flüssiglinse variierbar sind. Alternativ kann auch eine dünne, transparente Membrane zwischen den beiden Medien vorhanden sein.

Die durch Aktuatoren gezielt verformbare Linse kann auch als Polymerlinse ausgebildet sein, wobei sie dann in einer Ausführungsform einen optisch transparenten Container mit einem optisch transparenten Medium umfasst. Der Container ist zumindest auf einer Seite mit einer dünnen, transparenten Membrane verschlossen, die z.B. aus einem Polymer in elastisch verformbarem oder gummielastischem Zustand besteht. Die Membran umfasst einen zentralen Bereich, der den Linsenkörper darstellt sowie einen peripheren Bereich, der ein Reservoir mit optisch transparentem Medium aufweist, wobei die elastischen Eigenschaften der Membran oder deren Dicke in den verschiedenen Bereichen unterschiedlich sein können. Die Membran ist durch die Aktuatoren derart manipulierbar, dass der Inhalt des Reservoirs in den Linsenkörper und aus dem Linsenkörper in das Reservoir verschiebbar ist. Auf diese Weise sind die optischen Fokussiereigenschaften der Polymerlinse variierbar. Statt nur auf einer Seite von einer solchen Membran verschlossen zu sein, kann der Container auch auf beiden senkrecht zur Durchstrahlrichtung stehenden Seiten eine solche Membran aufweisen oder ganz und gar aus einer solchen Membran geformt sein.

Eine andere Art der Polymerlinse ist in Form einer Polymermembran ausgebildet, die aktiviert durch Aktuatoren in ihrer Wölbung verändert wird, um den Fokus einzustellen.

Das Material einer derartigen Polymerlinse kann ausgewählt sein aus der Gruppe z.B. umfassend Polyethylenglykoldimethacrylat (PEGDM), Hydroxyethylmethacrylat (HEMA), Copolymer aus PEGDM und HEMA, Hydrogel, Silikon, Softsilikon, Polysiloxan, Polyethylen, Polypropylen, modifiziertes Polystryrol oder Polyurethan.

Eine besonders geeignete Linsenform für gummielastisches Material ist beispielsweise die Meniskuslinse. Besonders bei Meniskenlinsen bewirken radiale Kräfte eine gut kontrollierte Änderung der beiden Linsenradien. Da die Materialdicke der Linse in allen Zonen oder Einfallshöhen in erster Näherung unverändert bleibt, verändern sich die den beiden Flächen zugeordneten Krümmungsradien unterschiedlich. Aus der Linsenmacherformel ergibt sich, dass dadurch auch die Brechkraft eines solchen elastischen Elements variiert wird. Meniskenlinsen haben zudem den Vorteil eines geringen Öffnungsfehlers, dies auch bei unterschiedlichen Verformungen, da die Meniskusform über den ganzen Einstellbereich erhalten bleiben kann. Die Wahl und insbesondere die Festlegung der Shore-Härte des Linsenmaterials wird weitgehend durch die Linsengrösse und Dimension festgelegt. Ein mögliches Material mit niedriger Shore A Härte (DIN 53505) wäre eine Silikon-artige Vergussmasse wie Wepesil VT3601E (Shore A Härte: 45), ein Material mit mittlerer Shore A Härte in Form eines Giessharzes wäre beispielsweise Polyurethan Wepuran VT3404 (Shore A Härte: 50).

Bei durch Aktuatoren gezielt verformbaren Linsen gibt es verschiedenste Ansteuer- und Funktionsprinzipien, beispielsweise Elektrobenetzung, Piezoaktuatoren, magnetische Aktuatoren, kapazitive Aktuatoren, thermische Aktuatoren, etc. Die Änderungen der optischen Eigenschaften der durch Aktuatoren gezielt verformbaren Linse werden dabei entweder direkt oder indirekt durch von den Aktuatoren erzeugte, elektrische Ansteuersignale bewirkt.

In einer bevorzugten Ausführungsform der Erfindung sind eine oder mehrere Linsen des optischen Systems in der Sendeeinheit zwischen der Laserlichtquelle und dem Umlenkmittel angeordnet.

In einer weiteren bevorzugten Ausführungsform der Erfindung sind eine oder mehrere Linsen des optischen Systems so angeordnet, dass sie bei Rotation des Umlenkmittels mit diesem um die Rotationsachse mitrotieren. Auf diese Weise kann die Apertur der durch Aktuatoren gezielt verformbaren Linse klein gehalten werden. Die Ausrichtung des Laserstrahls kann durch Ansteuerung einer oder mehrerer durch Aktuatoren gezielt verformbarer Linsen erreicht werden. Dabei können die benötigte Energie und die nötigen Steuersignale über Schleifringe, induktive Übertragung oder auf optischem Wege übertragen werden.

In einer weiteren bevorzugten Ausführungsform der Erfindung sind eine oder mehrere Linsen des optischen Systems dem Umlenkmittel nachgeordnet. Diese Anordnung hat den Vorteil, dass der optische Weg durch das Umlenkmittel verwendet werden kann zur Erzeugung einer gewünschten Austrittspupille, wobei der Weg zwischen Laserlichtquelle und Umlenkmittel klein gehalten werden kann. Ausserdem kann die benötigte Grösse des Umlenkmittels und die Durchtrittsöffnung der wenigstens einen durch Aktuatoren gezielt verformbaren Linse zwischen der Laserlichtquelle und dem Umlenkmittel klein gehalten werden, die Divergenz des Ausgangsstrahls kann dann durch die wenigstens eine dem Umlenkmittel nachgeordnete durch Aktuatoren gezielt verformbare Linse verändert und in gewünschter Form eingestellt werden.

Wie allgemein üblich ist eine mit der Seuereinheit verknüpfte Eingabeeinheit vorgesehen, mittels derer ein Nutzer Parameter oder Nutzungsweisen eingeben bzw. wählen kann. Die Eingabeeinheit kann Tasten oder ein Touchscreen beinhalten und auch mittels Fernbedienung oder sprachgesteuert bedienbar sein. Ausserdem kann eine Ausgabeeiheit (Display und/oder Lautsprecher) vorgesehen sein für Rückmeldungen an den Nutzer. Erfindungsgemäss ist die Steuereinheit so konfiguriert, dass durch Ansteuern der Aktuatoren die optischen Brechungseigenschaften der wenigstens einen durch Aktuatoren gezielt verformbaren Linse in zumindest zwei nicht zusammenfallenden Richtungen unterschiedlich variierbar sind. Insbesondere liegen diese Richtungen zumindest annähernd orthogonal zur optischen Achse der durch Aktuatoren gezielt verformbaren Linse. Derartige durch Aktuatoren gezielt verformbare Linsen eigenen sich besonders gut, um den Laserstrahl in seiner Ausrichtung zu beeinflussen und ihm die gewünschte Richtung im Raum zu geben.

Mit Vorteil werden im erfindungsgemässen Rotationslaser gravitationsfreie durch Aktuatoren gezielt verformbare Linsen, z.B. Polymerlinsen in Form einer Polymermembran oder Flüssiglinsen, wie sie in WO 2008/095923 beschrieben sind, eingesetzt. Dies ermöglicht den Einsatz des Rotationslasers in unterschiedlichsten Stationierungen und Gerätelagen.

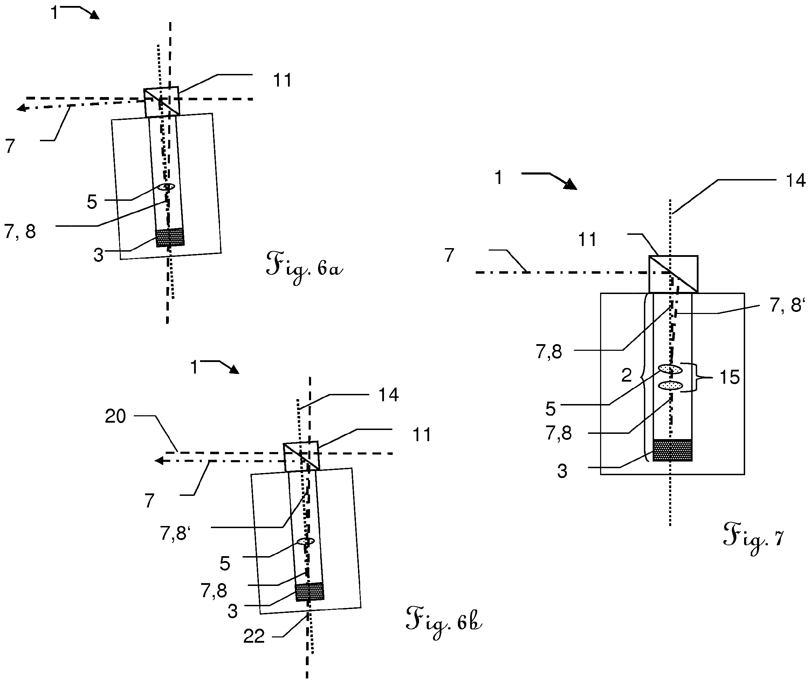

In einer weiteren bevorzugten Ausführungsform der Erfindung ist die Steuereinheit so konfiguriert, dass durch Ansteuern der Aktuatoren der wenigstens einen durch Aktuatoren gezielt verformbaren Linse der Laserstrahl in x- und/oder y-Richtung ausrichtbar ist, wobei x- und y-Richtung senkrecht aufeinander stehen und in Bezug auf die Linse definiert sind (vgl. z.B. auch Fig. 7).

In einer weiteren bevorzugten Ausführungsform der Erfindung ist die Steuereinheit so konfiguriert, dass durch Ansteuern der Aktuatoren der wenigstens einen durch Aktuatoren gezielt verformbaren Linse der Laserstrahl mit einem Versatz in x- und/oder y-Richtung aussendbar ist. Beispielsweise kann durch Kombination von zwei durch Aktuatoren gezielt verformbaren Linsen die Translation des Laserstrahls gezielt beeinflusst werden.

In einer weiteren bevorzugten Ausführungsform der Erfindung ist die Steuereinheit so konfiguriert, dass durch Ansteuern der Aktuatoren der wenigstens einen durch Aktuatoren gezielt verformbaren Linse der Laserstrahl statisch und/oder dynamisch manipulierbar ist. Eine statische Laserstrahlmanipulation bedeutet, dass der Laserstrahl nach einer ersten Einstellung über einen längeren Zeitraum unverändert bleibt. Unter einer dynamischen Laserstrahlmanipulation ist zu verstehen, dass die Ausrichtung und/oder der Fokus des Laserstrahls fortlaufend kontinuierlich oder fortlaufend schrittweise auf vorgegebene Sollwerte geregelt bzw. nachgeregelt werden.

In einer weiteren bevorzugten Ausführungsform der Erfindung weist der Rotationslaser einen ersten Sensor zum Erfassen von Winkelabweichungen der optischen Achse der Sendeeinheit von der horizontalen Ebene und/oder vertikalen Ebene auf (Neigungsfehler/Nivellierfehler). Der erste Sensor kann in Form eines Neigungssensors ausgebildet sein, der die Lageabweichungen des Gerätes von der horizontalen oder vertikalen Ebene erfasst. Geeignete Neigungssensoren sind im Stand der Technik bekannt, wie beispielsweise Libellen oder Tilt-Mems. Der erste Sensor ist mit der Steuereinheit gekoppelt, und die Steuereinheit ist aufgrund der vom ersten Sensor detektierten und an die Steuereinheit weitergeleiteten Winkelabweichungen so konfigurierbar, dass durch Ansteuern der Aktuatoren der wenigstens einen durch Aktuatoren gezielt verformbaren Linse eine durch die Winkelabweichungen der optischen Achse der Sendeeinheit verursachte Abweichung der Ausrichtung des Laserstrahls von der horizontalen oder vertikalen Ebene kompensierbar ist. Dadurch kann der Laserstrahl horizontal und/oder vertikal ausgerichtet werden, je nachdem für welchen Zweck oder in welcher Gerätelage der Rotationslaser eingesetzt werden soll. Die Kompensation bezüglich der Abweichungen von der horizontalen oder vertikalen Ebene kann mittels des erfindungsgemässen Einsatzes der wenigstens einen durch Aktuatoren gezielt verformbaren Linse erfolgen, ohne dass hierfür das Gerät motorisch oder hydraulisch in seiner Lage verändert (zum Beispiel verkippen) oder optische Komponenten mechanisch verstellt (zum Beispiel transliert) werden müssten.

Mit wenigstens einer durch Aktuatoren gezielt verformbarer Linse, wie sie erfindungsgemäss im Rotationslaser vorhanden ist, kann also die Nivellierautomatik eines sich selbst ausrichtenden Rotationslasers vereinfacht werden. Die Ausrichtung des Laserstrahls ist durchführbar, ohne dass dabei aufwändige Mechaniken und bewegliche Teile zum Einsatz kommen. Vielmehr wird der Aufbau des Gerätes vereinfacht und die Anzahl der benötigten Komponenten im Rotationslaser verringert, wodurch ein Rotationslaser erhalten wird, der leichter, robuster sowie einfacher und kostengünstiger in der Montage ist.

In einer weiteren bevorzugten Ausführungsform der Erfindung weist der Rotationslaser einen zweiten Sensor zum Erfassen von Winkelabweichungen und/oder Translationsabweichungen der Achse des Laserstrahls von der optischen Achse der Sendeeinheit auf. Der zweite Sensor ist mit der Steuereinheit gekoppelt, und die Steuereinheit ist aufgrund der vom zweiten Sensor detektierten Winkelabweichungen und/oder Translationsabweichungen so konfigurierbar, dass durch Ansteuern der Aktuatoren der wenigstens einen durch Aktuatoren gezielt verformbaren Linse die Winkelabweichungen und/oder Translationsabweichungen der Achse des Laserstrahls von der optischen Achse der Sendeeinheit kompensierbar sind.

Ist beispielsweise die Achse des Laserstrahls zur optischen Achse der Sendeeinheit parallel verschoben, so entsteht ein Höhenversatz der austretenden Laserstrahlung, wenn das Umlenkmittel um 180° gedreht wird. Durch Kombination zweier beabstandeter durch Aktuatoren gezielt verformbarer Linsen kann der Laserstrahl durch die erste durch Aktuatoren gezielt verformbare Linse zum gewünschten Ort abgelenkt und durch die zweite durch Aktuatoren gezielt verformbare Linse die achsparallele Ausrichtung wieder hergestellt werden. Hierdurch kann eine koaxiale Ausrichtung der Achse des Laserstrahls und der Rotationsachse des Umlenkmittels erzielt werden. Alternativ kann eine Kompensation von derartigen Translationsabweichungen der Achse des Laserstrahls von der optischen Achse der Sendeeinheit auch durch nur eine oder durch mehr als zwei durch Aktuatoren gezielt verformbare Linsen erfolgen, je nachdem, welche optischen Möglichkeiten die jeweiligen durch Aktuatoren gezielt verformbaren Linsen aufweisen.

Der zweite Sensor kann zum Erfassen von Winkelabweichungen und/oder Translationsabweichungen beispielsweise einen ersten Umlenkspiegel und einen Laserdetektor umfassen. Der erste Umlenkspiegel kann entweder für Referenzmessungen in den optischen Strahlengang des Laserstrahls in der Sendeeinheit eingeschwenkt werden oder als halbdurchlässiger Spiegel mit einer Durchlassquote von etwa 80% bis 95% fest im Strahlengang installiert sein. Mittels des ersten Umlenkspiegels kann der von der Laserlichtquelle erzeugte Laserstrahl auf den Laserdetektor umgelenkt werden, der dann die Abweichung des Laserstrahls von einer Nullposition (die optische Achse der Sendeeinheit und die Achse des Laserstrahls sind in der Nullposition deckungsgleich) bestimmen kann. Auf diese Weise können Winkelabweichungen der Achse des Laserstrahls von der optischen Achse der Sendeeinheit ermittelt werden. Um zusätzlich zu den Winkelabweichungen auch Translationsabweichungen der Achse des Laserstrahls von der optischen Achse der Sendeeinheit erfassen zu können und eine Unterscheidung zwischen Winkelabweichungen und Translationsabweichungen zu ermöglichen, kann der zweite Sensor beispielsweise zusätzlich zwischen dem ersten Umlenkspiegel und dem Laserdetektor eine Sammellinse aufweisen. Diese Sammellinse kann dabei auch als eine durch Aktuatoren gezielt verformbare Linse ausgeführt sein.

Die beschriebenen Winkelabweichungen und/oder Translationsabweichungen können beispielsweise durch Dejustierung von Komponenten des optischen Systems oder der Laserlichtquelle entstehen, die sich wiederum z.B. im Laufe des Betriebs durch Umwelteinflüsse wie Temperatur oder Luftfeuchtigkeit, Stösse oder Erschütterungen ergeben kann. Erfindungsgemäss kann eine Justierung dadurch erfolgen, dass eine direkte Anpassung der Optik durch entsprechende, elektrische Ansteuerung der in mehreren Richtungen unterschiedlich verstellbaren, wenigstens einen durch Aktuatoren gezielt verformbaren Linse erfolgt, also ohne dass dazu mechanische Eingriffe wie die Verschiebung von Linsen erforderlich sind. Optional können Translationsabweichungen der Achse des Laserstrahls von der optischen Achse der Sendeeinheit aber auch durch mechanische Mittel kompensiert werden.

In einer weiteren Ausführungsform ist die Kompensation der Translationsabweichungen der Achse des Laserstrahls von der optischen Achse der Sendeeinheit auch in Kombination mit einer Kompensation des Neigungsfehlers der mechanischen Achse durchführbar. Dazu ist eine dynamische Auslenkung der durch Aktuatoren gezielt verformbaren Linsen, synchronisiert mit der aktuellen Position und Orientierung des Umlenkmittels erforderlich.

In einer weiteren bevorzugten Ausführungsform der Erfindung ist die Steuereinheit des Rotationslasers so konfiguriert, dass durch Ansteuern der Aktuatoren der wenigstens einen durch Aktuatoren gezielt verformbaren Linse der Laserstrahl derart ausrichtbar ist, dass eine geneigte Laserebene erzeugbar ist, die um einen definierten Winkel $\alpha$ zur X Achse des Rotationslasers und/oder um einen definierten Winkel $\beta$ zur Y Achse des Rotationslasers geneigt ist. Dabei sind die X-Ache und die Y-Achse des Rotationslasers fest dem Rotationslaser zugeordnet, üblicherweise orthogonal zu einander, und liegen im Allgemeinen in der horizontalen Ebene. Die so aufgespannte Ebene wird angegeben durch die Gleichung:

$$a \cdot x + b \cdot y + z = 0$$

Durch den erfindungsgemässen Einsatz der wenigstens einen durch Aktuatoren gezielt verformbaren Linse ist also eine in eine oder in zwei Richtungen geneigte Laserebene erhältlich, ohne dass ein Verstellen des Gerätekörpers oder der Sendeeinheit zusammen mit dem Umlenkmittel erforderlich ist.

Zum Ausführen einer solchen erfindungsgemässen Funktion zum geneigten Ausrichten der Laserebene kann der Rotationslaser insbesondere so eingestellt sein, dass die Laserebene vor dem Ausführen der Funktion horizontal oder vertikal ausgerichtet ist. Diese Ausrichtung kann insbesondere mittels der wenigstens einen durch Aktuatoren gezielt verformbaren Linse erfolgt sein, wie oben dargestellt. Alternativ kann die Neigungsfunktion auch sofort, also ohne vorangegangene initiale, horizontale oder vertikale Ausrichtung des Laserstrahls gestartet werden. Die Eingabe der Winkel α und β kann beispielsweise über eine Eingabeeinheit erfolgen, die mit der Steuereinheit der wenigstens einen durch Aktuatoren gezielt verformbaren Linse gekoppelt ist. Ist das Umlenkmittel eine Pentaprisma, wie allgemein bei Rotationslasern üblich, so werden, um mit dem Rotationslaser eine statische, geneigte Ebene in den Raum projizieren zu können, die Aktuatoren der wenigstens einen durch Aktuatoren gezielt verformbaren Linse so angesteuert, dass der Laserstrahl in Bezug auf die optische Achse der Sendeeinheit einen definierten Winkel einnimmt. Auf diese Weise kann eine Laserebene mit Neigung entsprechend des eingegebenen Neigungs-Sollwertes erzeugt werden.

Die oben beschriebene dynamische Ansteuerung der Aktuatoren kann auch genutzt werden, um mit dem Laserstrahl Muster auf eine Objektoberfläche zu projizieren, wobei unter Umständen die Ansteuerung der Aktuatoren genügt und das Umlenkmittel eine fixe Position einnimmt. Durch eine fortlaufende Nachregelung der Ausrichtung des Laserstrahls mittels der Aktuatoren ist die durch den Laserstrahl erzeugte Referenzlinie auf dem Objekt schliesslich in Form eines Musters, beispielsweise eines Kreises sichtbar.

Eine mögliche Anwendung einer derartigen Laserstrahlmanipulation ist beispielsweise die Markierung eines Referenzpunktes auf einem Objekt, z.B. eines Bohrlochs. Wird das Bohrloch auf herkömmliche Weise, d.h. durch einen Laserstrahlpunkt markiert, so wird dieser beim Heranführen des Bohrers an die Wand vom Bohrer verdeckt und eine genaue Bestimmung der Stelle, an der die Bohrung erfolgen soll, ist nicht mehr möglich. Mit Hilfe der oben ausgeführten dynamischen Laserstrahlmanipulation ist das Bohrloch anstatt in Form eines Punktes als Aussparung eines Kreises mit einstellbarem Durchmesser darstellbar.

Das Muster der Referenzlinie kann aber auch jede andere gewünschte, insbesondere geometrische Form haben, beispielsweise eine Ellipse oder ein Polygon wie zum Beispiel ein Dreieck, Rechteck oder Quadrat. Die Abmessungen der Projektion sind distanzabhaengig. Die gewünschten Abmessungen können deshalb über eine Distanzmessung automatisch oder durch Eingabe am Gerät oder mittels Fernbedienung verändert werden.

In einer weiteren bevorzugten Ausführungsform der Erfindung ist die Steuereinheit so konfiguriert, dass durch Ansteuern der Aktuatoren der wenigstens einen durch Aktuatoren gezielt verformbaren Linse der Querschnitt des Laserstrahls in seiner geometrischen Form veränderbar ist. Als Laserstrahl in einem Rotationslaser, der zur Orientierung oder Positionierung an Objekten dienen soll, ist ein runder gaussscher Laserstrahl nullter Ordnung bevorzugt. In der Regel hat ein Laserstrahl, der von einer marktüblichen Laserdiode erzeugt wird, einen elliptischen Querschnitt. Mit Hilfe der wenigstens einen durch Aktuatoren gezielt verformbaren Linse lässt sich die geometrische Form des Querschnitts des Laserstrahls ändern, entweder durch unsymmetrische Ansteuerung einer einzelnen durch Aktuatoren gezielt verformbaren Linse, oder durch Kombination zweier durch Aktuatoren gezielt verformbarer Linsen, in Analogie zum anamorphen Prismapaar, wie in US 5,239,414 offenbart.

Eine weitere mögliche Anwendung einer derartigen Laserstrahlmanipulation, sprich der Veränderung der geometrischen Form des Querschnitts des Laserstrahls ist beispielsweise das Erzeugen eines gefächerten Laserstrahls, wodurch eine gerade Linie definierter Länge auf einem Objekt projizierbar ist. Sehr einfach lässt sich dies realisieren, durch wenigstens eine durch Aktuatoren gezielt verformbare Linse, die dem Umlenkmittel nachgeordnet ist und den von dem Umlenkmittel kommenden, im Querschnitt punktförmigen Laserstrahl in einen gefächerten Strahl aufweitet. Der gefächerte Laserstrahl kann dabei sowohl horizontal, vertikal als auch um einen definierten Winkel abweichend von der horizontalen oder vertikalen Richtung geneigt sein.

Weiterhin kann für den gefächerten Laserstrahl am Gerät, beispielsweise in einer Programmspeichereinheit, die mit der Steuereinheit gekoppelt ist, ein programmiertes Set an Orientierungen und/oder Neigungen hinterlegt sein, wie z.B. Neigungen gegenüber der Horizontalen von 0°, 30°, 45°, 60°, 90° und/oder Orte im Raum an denen der Lassterstrahl in aufgefächerter Form erscheinen soll. Der gefächerte Laserstrahl wird dann an dem vorgegebenen Ort unter der vorgegebenen Neigung auf das Objekt projiziert. Unter Orientierung ist hier die Orientierung im Raum, d.h. ein Winkel oder Winkelbereich im X-Y-Koordinatensystem des Rotationslasers zu verstehen, unter welchem der Fächer z.B auf die Oberfläche eines Objekts projiziert wird. Die dazu notwendigen Informationen sind z.B. erhältlich mittels Winkelencodern, wie sie in Rotationslasern üblich sind, kombiniert mit den X-Y-Koordinaten der aufgespannten Ebene des Rotationslasers, über deren Flächennormale der momentane Azimuthwinkel und Inklinationswinkel des Laserstrahls herleitbar ist, was die momentane Raumrichtung des Laserstrahls ergibt.

Weiterhin kann die Steuereinheit so konfiguriert sein, dass durch Ansteuern der Aktuatoren der wenigstens einen durch Aktuatoren gezielt verformbaren Linse der Laserstrahl in einen gefächerten Laserstrahl mit veränderlicher Orientierung und/oder Neigung umwandelbar ist und dass diese Umwandlung an einer oder mehreren ortsfesten Stellen des umlaufenden rotierenden Laserstrahls durchführbar ist. Das bedeutet, dass der gefächerte Laserstrahl auch während des Rotationsbetriebs unter gewünschten und beispielsweise vom Benutzer eingegebenen Orientierungen und/oder Neigungen projizierbar ist. Beispielsweise projiziert der Rotationslaser im Umlaufbetrieb durch einen schnell umlaufenden punktförmigen Laserstrahl in einem Raum eine horizontale Linie auf die umgebenden Wände. An zwei durch den Benutzer vorgegebenen Stellen im Raum, z.B. dort wo eine Tür ausgebrochen werden soll, wird der Strahl durch die verformbare Linse in einen gefächerten Strahl mit Neigung 90° zur Horizontalen aufgeweitet, so dass die Position der Türaussparung durch zwei vertikale Laserlinien angezeigt wird. Auch hier werden die nötigen Positionsinformationen von den Winkelencodern des Rotationslasers zur Verfügung gestellt. Zusätzlich zum umlaufenden Betrieb ist auch ein intermittierender Betrieb denkbar. In diesem Modus rotiert der Laserstrahl bis zum gewünschten azimuth Winkel, hält dort an, aendert kurzzeitig seine Form zu einem Fächer, wird dann wieder als normal Laserstrahl geschaltet und setzt sich danach wieder in Bewegung. Zur Erhöhung der Sichtbarkeit sind hierbei verschiedenster Bewegugsabläufe denkbar, z.B. scannend (s.u.) oder rotierend.

In einer weiteren bevorzugten Ausführungsform der Erfindung ist die Steuereinheit so konfiguriert, dass durch Ansteuern der Aktuatoren der wenigstens einen durch Aktuatoren gezielt verformbaren Linse der Laserstrahl eine Scanbewegung ausführt. Als Scanbewegung ist hier eine hinund her Bewegung des Laserstrahls in Rotationsrichtung verstanden. Bei einer Scanbewegung über einen kleinen Winkelbereich kann der Rotationslaser im Punktbetrieb eingesetzt werden, da die Scanbewegung durch entsprechende Ansteuerung der wenigstens einen durch Aktuatoren gezielt verformbaren Linse bewirkt wird, ohne dass eine Rotation des Umlenkmittels erforderlich ist.

In einer weiteren bevorzugten Ausführungsform der Erfindung weist der Rotationslaser eine Steuereinheit auf, die derart konfiguriert ist, dass durch Ansteuern der Aktuatoren der wenigstens einen durch Aktuatoren gezielt verformbaren Linse eine Divergenz des Laserstrahls einstellbar ist. Der Nutzer kann so durch Eingabe am Gerät oder mittels Fernbedienung den Fokus bzw. den gewünschten Solldurchmesser des Laserstrahls einstellen.

Es werden eine oder mehrere durch Aktuatoren gezielt verformbare Linsen zum Einstellen der Divergenz des Laserstrahls verwendet. Insbesondere ist es möglich mit zwei durch Aktuatoren gezielt verformbare Linsen die Divergenz des Laserstrahls so einzustellen, dass die benötigten Durchtrittspupillen der Linsen minimal werden.

Mit der ersten durch Aktuatoren gezielt verformbaren Linse kann beispielsweise ein durch Translation von der optischen Achse der Sendeeinheit abweichender Laserstrahl in Richtung der optischen Achse der Sendeeinheit abgelenkt werden. Mit der zweiten durch Aktuatoren gezielt verformbaren Linse kann dann, die koaxiale Ausrichtung der Achse des Laserstrahls mit der optischen Achse der Sendeeinheit erzielt werden, wie oben beschrieben,und zusätzlich auch die benötigte Divergenz bzw. der benötigte Fokus des Ausgangsstrahls des Rotationslasers eingestellt werden.

Ganz allgemein kann die Divergenz des Laserstrahls jeweils sehr einfach durch wenigstens eine, dem Umlenkmittel nachgeordnete durch Aktuatoren gezielt verformbare Linsen eingestellt werden.Bevorzugt wird die Divergenz aber mit einer der Laserdiode unmittelbar nachgeordneten, durch Aktuatoren gezielt verformbaren Linse eingestellt. Wiederum mit dem Vorteil der Reduzierung der benötigten Pupille.

In einer weiteren bevorzugten Ausführungsform der Erfindung weist der Rotationslaser eine Entfernungsmesseinheit auf zum Messen von Entfernungen zu Punkten auf einem Objekt, an dem der Laserstrahl reflektiert wird. Die Entfernungsmesseinheit ist mit der Steuereinheit gekoppelt und leitet ihre gemessenen Daten an diese weiter. Die Steuereinheit ist aufgrund der von der Entfernungsmesseinheit gemessenen Entfernungen so konfigurierbar, dass durch Ansteuern der Aktuatoren der wenigstens einen durch Aktuatoren gezielt verformbaren Linse eine entfernungsabhängige Divergenz bzw. Fokus des Laserstrahls so einstellbar ist, dass ein konstanter Soll-Durchmesser eines durch den Laserstrahl erzeugten Laserstrahlpunktes auf dem Objekt erhältlich ist. Die wenigstens eine durch Aktuatoren gezielt verformbare Linse, wie sie erfindungsgemäss im Rotationslaser eingesetzt wird, ermöglicht also eine entfernungsangepasste Fokussierung des Laserstrahls. Zum Ausführen einer solchen erfindungsgemässen Funktion wird bei einem sich im Raum bewegenden Laserstrahl die Entfernung fortlaufend gemessen und die entfernungsabhängige Divergenz fortlaufend angepasst.

Die Entfernungsmesseinheit kann beispielsweise einen zweiten Umlenkspiegel und einen Empfänger umfassen. Mittels des zweiten Umlenkspiegels, der analog zu dem oben beschriebenen, ersten Umlenkspiegel ausgebildet sein kann, kann ein von einem Objekt reflektierter Laserstrahl auf den Empfänger umgelenkt werden, der dann die Entfernung zwischen dem Rotationslaser und dem Objekt nach dem Prinzip der Phasenmessung oder nach dem Prinzip der Laufzeitmessung bestimmen kann.

In einer besonders vorteilhaften Ausführungsform weist die Entfernungsmesseinheit einen konzentrisch zum Umlenkmittel angeordneten Parabolspiegel auf.

Die Funktionalität der entfernungsabhängigen Divergenzanpassung des Laserstrahls beim erfindungsgemässen Rotationslasers kann nicht nur im Rotationsbetrieb, sondern auch im Punktbetrieb, also beim Aussenden des Laserstrahls ohne Rotation, oder scannend im Linienbetrieb, also beim Hin- und Herschwenken des Laserstrahls in einem bestimmten Öffnungswinkel, zum Einsatz kommen.

In einer weiteren bevorzugten Ausführungsform der Erfindung ist die Steuereinheit mittels einer am Rotationslaser befindlichen Eingabeeinheit und/oder einer externen Bedieneinheit und/oder Spracheingabe konfigurierbar, insbesondere durch Eingabe von Sollwerten für die Ausrichtung des Laserstrahls und/oder den translatorischen Versatz und/oder die geometrische Form des Querschnitts des Laserstrahls und/oder die Neigung der vom Laserstrahl erzeugten Laserebene und/oder den Durchmesser des Laserstrahlpunktes auf einem vom Laserstrahl getroffenen Objekt oder zur Definition eines zu projizierenden Musters auf einem Objekt. Die Eingabeeinheit und/oder externe Bedieneinheit und/oder Spracheingabe ist mit der Steuereinheit der wenigstens einen durch Aktuatoren gezielt verformbaren Linse gekoppelt, wodurch die Steuereinheit aufgrund der eingegebenen Sollwerte konfiguriert wird und die wenigstens eine durch Aktuatoren gezielt verformbare Linse entsprechend ansteuert.

Mit dem erfindungsgemässen Rotationslaser sind die oben aufgeführten Funktionalitäten, nämlich

- Kompensation von Winkelabweichungen der optischen Achse der Sendeeinheit von der horizontalen Ebene und/oder vertikalen Ebene;

- Kompensation von Winkelabweichungen und/oder Translationsabweichungen der Achse des Laserstrahls von der optischen Achse der Sendeeinheit;

- Erzeugen einer um einen definierten Winkel $\alpha$ geneigt zur X-Achse des Rotationslasers und/oder um einen definierten Winkel $\beta$ geneigt zur Y-Achse des Rotationslasers geneigten Laserebene;

- Einstellen einer Divergenz des Laserstrahls;

- Einstellen einer entfernungsabhängigen Divergenz des Laserstrahls;

- Projektion eines Musters auf eine Objektoberfläche; und

- Veränderung der geometrischen Form des Querschnitts des Laserstrahls

entweder einzeln oder in Kombination miteinander ausführbar.

Die vorliegende Erfindung umfasst weiterhin ein Lasersystem aus einem Rotationslaser und einem Laserempfänger, wobei der Rotationslaser einen Datenkommunikations-Empfänger und der Laserempfänger einen Datenkommunikations-Transmitter aufweist und der Rotationslaser und der Laserempfänger über eine Datenkommunikation miteinander verbunden sind. Der Laserempfänger weist ausserdem einen Laserstrahl-Detektor und eine mit dem Detektor verbundene Auswerteeinheit auf, die mit dem Datenkommunikations-Transmitter verbunden ist. Erfindungsgemäss ist der Rotationslaser ein Rotationslaser wie oben ausgeführt. Die Auswerteeinheit des Laserstrahl-Detektors ist derart konfiguriert, dass sie anhand eines auf dem Laserstrahl-Detektor durch den Laserstrahl erzeugten Empfangssignals einen Divergenzstatus des Laserstrahls ermittelt und diesen mittels des Datenkommunikations-Transmitters an den Datenkommunikations-Empfänger des Rotationslasers übermittelt. Der Datenkommunikations-Empfänger des Rotationslasers ist mit der Steuereinheit der durch Aktuatoren gezielt verformbaren Linse gekoppelt. Die Steuereinheit ist derart konfiguriert, dass sie einen Divergenz-Sollwert/Soll-Durchmesser mit dem übermittelten Divergenzstatus (z.B. Ist-Durchmesser) vergleicht und durch Ansteuern der Aktuatoren der wenigstens einen durch Aktuatoren gezielt verformbaren Linse die Divergenz bzw. den Fokus des Laserstrahls an den Divergenz-Sollwert/Soll-Durchmesser anpasst.

Das erfindungsgemässe Verfahren und der erfindungsgemässe Rotationslaser werden nachfolgend anhand von in den Zeichnungen schematisch dargestellten konkreten Ausführungsbeispielen rein beispielhaft näher beschrieben. Dabei wird auch auf weitere Vorteile der Erfindung eingegangen. Gleiche Elemente in den Zeichnungen sind mit gleichen Bezugszeichen gekennzeichnet. Im Einzelnen zeigen:

Fig. 1      eine erste Ausführungsform eines erfindungsgemässen Rotationslasers;

Fig. 2      eine weitere Ausführungsform des erfindungsgemässen Rotationslasers;

Fig. 3a und 3b      eine Ausführungsform einer durch Aktuatoren gezielt verformbaren Linse eines erfindungsgemässen Rotationslasers mit Manipulation des Laserstrahls in Draufsicht (Fig. 3a) und Seitenansicht (Fig. 3b);

Fig. 4      eine weitere Ausführungsform einer durch Aktuatoren gezielt verformbaren Linse eines erfindungsgemässen Rotationslasers in Draufsicht;

Fig. 5      im Schnitt von der Seite eine durch Aktuatoren gezielt verformbare Linse eines erfindungsgemässen Rotationslasers mit verschiedenen Ausführungsformen von Manipulationen des Laserstrahls;

Fig. 6a und 6b — eine schematische Darstellung einer statischen Manipulation des Laserstrahls bei einem erfindungsgemässen Rotationslaser;

Fig. 7 — eine weitere schematische Darstellung einer statischen Manipulation des Laserstrahls bei einem erfindungsgemässen Rotationslaser;

Fig. 8 — einen erfindungsgemässen Rotationslaser mit Projektionen von Laserebenen;

Fig. 9 — eine Ausführungsform einer dynamischen Laserstrahlmanipulation mit einem erfindungsgemässen Rotationslaser;

Fig. 10a und 10b — einen erfindungsgemässen Rotationslaser mit Projektion einer Referenzlinie auf ein Objekt in perspektivischer Ansicht (Fig. 10a) und in Draufsicht (Fig. 10b);.

Fig. 11a und 11b — eine weitere schematische Darstellung einer statischen Manipulation des Laserstrahls bei einem erfindungsgemässen Rotationslaser;

Fig. 12a und 12b — eine weitere schematische Darstellung einer statischen Manipulation des Laserstrahls bei einem erfindungsgemässen Rotationslaser;

Fig. 13 — ein erfindungsgemässes Lasersystem aus einem erfindungsgemässen Rotationslaser und einem Laserempfänger.

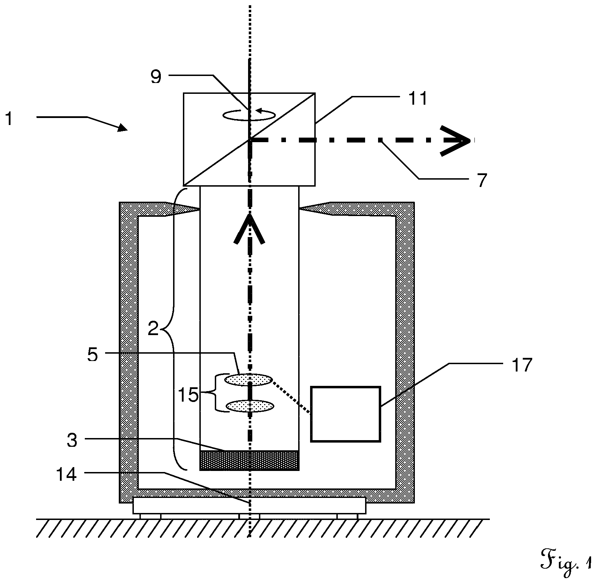

In **Figur 1** ist eine Ausführungsform eines Rotationslasers 1 entsprechend der vorliegenden Erfindung schematisch im Schnitt von der Seite gezeigt. Der Rotationslaser 1 weist eine Sendeeinheit 2 und ein Umlenkmittel 11 auf. Die Sendeeinheit 2 umfasst eine Laserlichtquelle 3, z.B. eine Laserdiode, zur Erzeugung eines Laserstrahls 7. In diesem Beispiel ist auch ein optisches System 15 mit einer oder mehreren Linsen in der Sendeeinheit 2 angeordnet, die entlang einer optischen Achse 14 der Sendeeinheit angeordnet sind, so dass im Idealfall eine Achse des von der Laserlichtquelle 3 emittierten Laserstrahls 7 deckungsgleich mit der optischen Achse der Sendeeinheit 14 ist. Das optische System 15 ist zwischen der Laserlichtquelle 3 und dem Umlenkmittel 11 angeordnet. Das Umlenkmittel 11 dient der gerichteten Aussendung des Laserstrahls 7 und ist um eine Rotationsachse 9 drehbar gelagert, die idealer Weise deckungsgleich mit der optischen Achse 14 der Sendeeinheit und der Achse des Laserstrahls 7 ist. Das Umlenkmittel 11 umfasst typischerweise ein Pentaprisma, das am freien Ende der Sendeeinheit 2 gegenüber der Laserlichtquelle 3 angeordnet ist und das den emittierten Laserstrahl im 90° Winkel ablenkt. Wenigstens eine der Linsen des optischen Systems 15 ist eine durch Aktuatoren gezielt verformbare Linse 5. Dabei kann die durch Aktuatoren gezielt verformbare Linse 5 entweder die einzige Linse im optischen System sein oder mit einer oder mehreren starren Linsen kombiniert sein. Alternativ oder zusätzlich können auch weitere durch Aktuatoren gezielt verformbare Linsen im optischen System 15 eingesetzt sein. Die Linsen können dabei in jeder beliebigen Reihenfolge im optischen System 15 angeordnet sein. Weiterhin können die Linsen zwischen der Laserlichtquelle 3 und der Umlenkeinheit 11 in der Sendeeinheit 2 angeordnet (so wie in Fig. 1 dargestellt) und/oder dem Umlenkmittel 11 nachgeordnet sein (in Fig. 1 nicht dargestellt). Es können auch Linsen des optischen Systems auf der Rotationsachse 9 mitrotierend angeordnet sein (ebenfalls hier nicht dargestellt) Der Rotationslaser 1 verfügt weiterhin über eine Steuereinheit 17, die der geregelten Steuerung des Umlenkmittels 11 und der geregelten Manipulation der wenigstens einen durch Aktuatoren gezielt verformbaren Linse 5 dient.

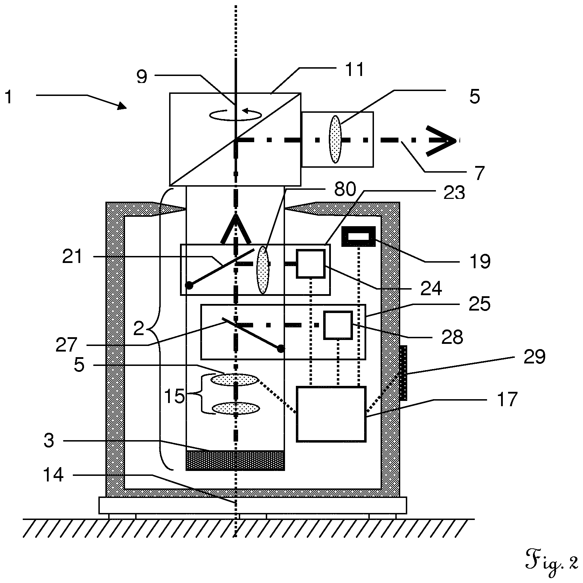

**Figur 2** zeigt eine weitere Ausführungsform eines erfindungsgemässen Rotationslasers 1. Neben den in Fig. 1 gezeigten Komponenten weist der Rotationslaser 1 zusätzlich eine durch Aktuatoren gezielt verformbare Linse 5 auf, die dem Umlenkmittel nachgeordnet ist. Der Rotationslaser 1 weist ausserdem einen ersten Sensor 19 (Neigungssensor, Tilt-Mems) zum Erfassen von Winkelabweichungen der optischen Achse der Sendeeinheit von der horizontalen und/oder vertikalen Ebene auf, wobei der erste Sensor 19 für eine Datenübertragung mit der Steuereinheit 17 gekoppelt ist (angedeutet durch gepunktete Linie).

Der Rotationslaser 1 weist weiter einen zweiten Sensor 23 zum Erfassen von Winkelabweichungen der Achse des Laserstrahls von der optischen Achse der Sendeeinheit 14 auf, wobei der zweite Sensor 23 einen ersten Umlenkspiegel 21 und einen Laserdetektor 24 umfasst. Der erste Umlenkspiegel 21 ist in dem hier gezeigten Beispiel in der Sendeeinheit 2 schwenkbar gelagert und kann bei Bedarf zum Umlenken des Laserstrahls 7 auf den Laserdetektor 24 in den Strahlengang des Laserstrahls eingeschwenkt werden. Der zweite Sensor 23, insbesondere der Laserdetektor 24 des zweiten Sensors 23, ist für eine Datenübertragung mit der Steuereinheit 17 gekoppelt (angedeutet durch gepunktete Linie).

Der Rotationslaser 1 weist ausserdem eine Entfernungsmesseinheit 25 auf, die einen ebenfalls schwenkbaren zweiten Umlenkspiegel 27 und einen Empfänger 28 umfasst. Bei Bedarf kann der zweite Umlenkspiegel 27 in den Strahlengang der Sendeeinheit 2 eingeschwenkt werden, so dass der von einem Objekt reflektierte Laserstrahl auf den Empfänger 28 umgeleitet wird. Die Entfernungsmesseinheit 25, insbesondere der Empfänger 28, ist mit der Steuereinheit 17 gekoppelt(gepunktete Linie), so dass die jeweils gemessenen Entfernungsdaten an die Steuereinheit übermittelt werden können.

Der Rotationslaser 1 weist ausserdem eine Eingabeeinheit 29 zum Eingeben von Sollwerten auf, wobei die Eingabeeinheit 29 ebenfalls zur Datenübertragung mit der Steuereinheit 17 gekoppelt ist. Aufgrund der Kopplung der Steuereinheit 17 mit den Sensoren ist es auch möglich, die Sensoren "aktiv" und "passiv" zu schalten. Das bedeutet z.B. dass für Referenzmessungen der zweite Sensor 23 "aktiv" geschaltet werden kann, wobei für die Referenzmessung dann der schwenkbare erste Umlenkspiegel 21 in den Strahlengang verschwenkt wird. Nach erfolgter Referenzmessung wird der zweite Sensor 23 wieder "passiv" gesetzt und der erste Umlenkspiegel 21 in seine Passivposition ausserhalb des Strahlengangs zurückverschwenkt. Analoges ist für die Entfernungsmesseinheit 25 möglich. Auch für den Neigungssensor ist ein "aktiv"- und "passiv"-Schalten denkbar.

Alternativ können die Umlenkspiegel fix im Strahlengang platziert und als halbdurchlässiger Spiegel mit hoher Durchlassquote von etwa 80% bis 95% ausgebildet sein, wodurch "kontinuierliche" Referenzmessungen bzw. Distanzmessungen während des Betriebs möglich sind. Bei einer solchen Ausgestaltung des Rotationslasers können beispielsweise Dejustierungen während des Betriebes unmittelbar bei ihrem Auftreten erfasst und kompensiert werden. Überall dort, wo hohe Präzision gefordert ist und/oder Umwelteinflüsse die Wahrscheinlichkeit für Dejustierungen des optischen Systems während des Betriebs wahrscheinlich erscheinen lassen bzw. Distanzen von grossem Interesse sind, ist dies eine sehr hilfreiche Variante des erfindungsgemässen Rotationslasers.

Da neben Winkelabweichungen auch Translationsabweichungen der Achse des Laserstrahls von der optischen Achse der Sendeeinheit 14 auftreten können, sind Mittel erforderlich, die es erlauben, die Art der Abweichung zu detektieren, um so eine geeignete Kompensation durchführen zu können. Eine Möglichkeit dies zu detektieren besteht darin den zweiten Sensor 23 zwischen dem ersten Umlenkspiegel 21 und dem Laserdetektor 24 zusätzlich mit einer Sammellinse 80 auszurüsten, über die der mittels des ersten Umlenkspiegels 21 umgelenkte, von der Laserlichtquelle 3 erzeugte Laserstrahl 7 auf den Laserdetektor 24 projiziert wird. Mittels der Auftreffposition des Laserstrahls auf dem Laserdetektor 24 kann dann die Winkel- und/oder Translationsabweichung des Laserstrahls von der Nullposition bestimmt werden und eine entsprechende Kompensation durchgeführt werden. Dabei kann die Sammellinse 80 auch als eine durch Aktuatoren gezielt verformbare Linse ausgeführt sein. Diese Linse kann dann von der Steuereinheit 17 je nach bedarf als Sammellinse aktiv oder als plan parallele Platte (passiv) geschaltet werden.

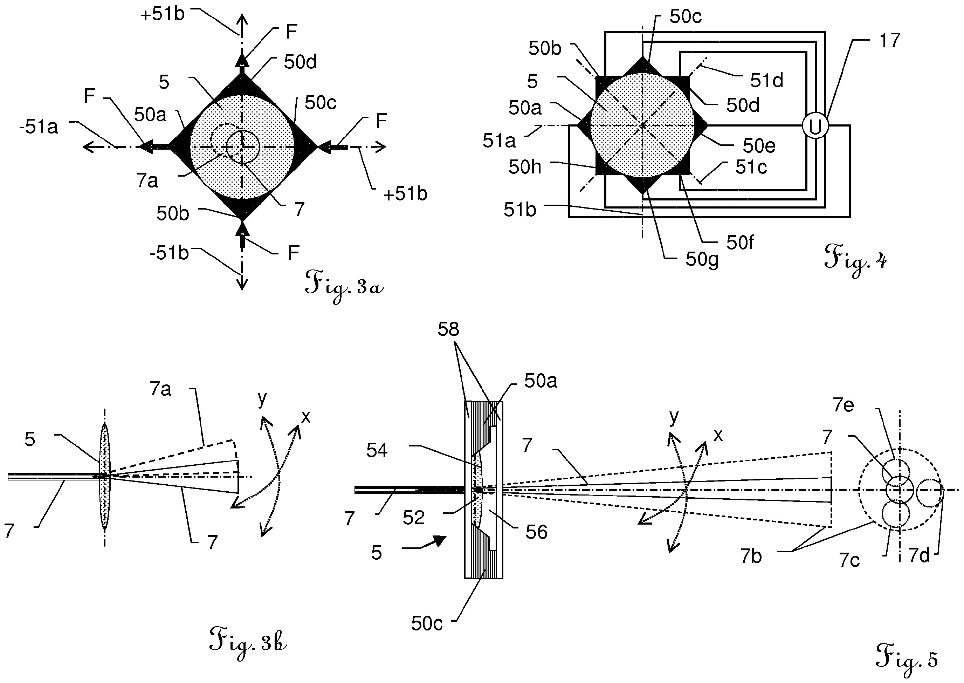

In den **Figuren 3a** und **3b** ist eine Ausführungsform einer durch Aktuatoren gezielt verformbaren Linse 5 eines erfindungsgemässen Rotationslasers 1 sowie eine Manipulation des Laserstrahls 7 dargestellt. Figur 3a zeigt eine Draufsicht der durch Aktuatoren gezielt verformbaren Linse 5, Figur 3b eine Seitenansicht. In Figur 3a sind vier Aktuatoren 50a, 50b, 50c, 50d symbolisiert, welche durch die Steuereinheit 17 ansteuerbar sind und durch deren

Ansteuerung die optischen Brechungseigenschaften der durch Aktuatoren gezielt verformbaren Linse 5 in den Richtungen +51a, -51a, +51b, und -51b unterschiedlich variierbar sind. Denkbar wäre auch eine gezielt verformbare Linse mit drei ansteuerbaren Aktuatoren (nicht dargestellt). Die Pfeile F symbolisieren eine Kraftwirkung auf die durch Aktuatoren gezielt verformbare Linse, wodurch eine Verformung der Grenzfläche zwischen dem ersten und dem zweiten Medium der durch Aktuatoren gezielt verformbaren Linse 5 hervorgerufen wird. Im gezeigten Beispiel werden die optischen Brechungseigenschaften der gezielt verformbaren Linse 5 durch die Ansteuerung derart variiert, dass die Durchtrittsrichtung des Laserstrahls 7 durch die gezielt verformbare Linse von einem zentralen Durchtritt (Kreis mit durchgehender Linie) in Richtung -51a und +51b gebrochen wird (Kreis mit gestrichelter Linie), wodurch sich eine entsprechende Ausrichtung des Laserstahls im Raum in -x- und +y-Richtung ergibt (siehe Fig. 3b).

**Figur 4** zeigt eine weitere Ausführungsform einer durch Aktuatoren gezielt verformbaren Linse 5 in Draufsicht, wie sie im erfindungsgemässen Rotationslaser eingesetzt wird und welche entlang ihres Umfangs über acht Aktuatoren 50a bis 50h verfügt. Die hier in den Figurenbeschreibungen dargestellten vier oder acht Aktuatoren sind dabei rein beispielhaft zu sehen. Die Anzahl kann auch bei drei oder deutlich höheren Werten liegen, je nach den Anforderungen an die Feineinstellbarkeit der durch Aktuatoren gezielt verformbaren Linse 5. Durch die Ansteuerung der Aktuatoren 50a bis 50h kann die Brechkraft der durch Aktuatoren gezielt verformbaren Linse in den unterschiedlichen Richtungen $\pm 51a$, $\pm 51b$, $\pm 51c$ und $\pm 51d$ in kontrollierter Weise unterschiedlich variiert werden. Die Ansteuerung erfolgt mittels der Steuereinheit 17, was durch die Verbindungslinien dargestellt ist. Die Aktuatoren müssen dabei nicht zwingend gleichmässig über den Umfang der durch Aktuatoren gezielt verformbaren Linse 5 verteilt sein, wie dies hier beispielhaft gezeigt ist. Bei ungleichmässiger Verteilung ist die Ansteuerung allerdings etwas komplizierter. Sinnvoll kann eine solch ungleichmässige Verteilung der Aktuatoren beispielsweise bei einer nicht gravitationsfreien durch Aktuatoren gezielt verformbaren Linse sein, um ungleichmässig auf die Linse einwirkende, gravitationsbedingte Kräfte besser ausgleichen zu können. Eine andere Anwendung dieser ungleichmässigen Aktuatorenanordnung ist eine gezielte Translation des Laserstrahls durch die durch Aktuatoren gezielt verformbare Linse, um zum Beispiel Translationsabweichungen zwischen der optischen Achse der Laserlichtquelle und der Achse der Sendeeinheit bzw. der Rotationsachse des Umlenkmittels 11 zu kompensieren. Weitere Anwendungen sind zum Beispiel die gezielte Verformung der Linse zur Erzeugung eines dedizierten Laserfächers oder zur Kompensation des elliptischen Profils des Laserstrahls 7.

In **Figur 5** ist eine durch Aktuatoren gezielt verformbare Linse 5, im Speziellen eine Flüssiglinse, eines erfindungsgemässen Rotationslasers 1 mit verschiedenen Ausführungsformen von Manipulationen des Laserstrahls 7 dargestellt. Die Flüssiglinse 5 ist kreissymmetrisch aufgebaut und hier im Schnitt in Seitenansicht dargestellt. Die Flüssiglinse 5 ist als eine Kammer mit einem transparenten Gehäuse 58 ausgebildet wie im Stand der Technik üblich und enthält eine erste Flüssigkeit 52 und eine zweite Flüssigkeit 56. Die beiden Flüssigkeiten sind optisch transparent, nicht mischbar und weisen unterschiedliche optische Brechzahlen auf. Zwischen der ersten und der zweiten Flüssigkeit liegt eine Grenzfläche 54 vor, an der der durchtretende Laserstrahl manipuliert werden kann. Alternativ kann auch eine dünne, transparente Membrane zwischen den beiden Flüssigkeiten vorhanden sein. Haben beide Flüssigkeiten zumindest annähernd dieselbe spezifische Dichte, so können Gravitationseinflüsse auf die Form der Grenzfläche 54 zu einem sehr hohen Anteil ausgeschlossen werden. Zur Ansteuerung sind in diesem Beispiel vier Aktuatoren angebracht, mit deren Hilfe die geometrische Form der Grenzfläche variiert werden kann, wobei in der Figur nur zwei davon - 50a und 50c - dargestellt sind.

Zum einen können mit entsprechender Ansteuerung der Aktuatoren die Brechungseigenschaften der Flüssiglinse 5 derart variiert werden, dass der Laserstrahl 7 in eine andere Raumrichtung abgelenkt wird (durch die Pfeile x und y angedeutet), z.B. nach 7c, 7d, 7e. Durch entsprechende Ansteuerung kann mit der Flüssiglinse 5 bei einem erfindungsgemässen Rotationslaser 1 aber neben einer gezielten Ausrichtung des Laserstrahls auch eine Brennweitenänderung/Fokusseinstellung durchgeführt werden, wie dies beispielsweise durch die gestrichelten Linien 7b dargestellt ist.

**Figuren 6a** und **6b** zeigen eine schematische Darstellung einer statischen Manipulation des Laserstrahls 7 bei einem erfindungsgemässen Rotationslaser 1, wobei der Rotationslaser 1 in einer stark vereinfachten Ausführung gezeigt ist. In Figur 6a ist der erfindungsgemässe Rotationslaser 1 mit ausgesendetem Laserstrahl 7 vor Ansteuerung der durch Aktuatoren gezielt verformbaren Linse 5 dargestellt. Figur 6b zeigt den erfindungsgemässen Rotationslaser 1 mit ausgesendetem Laserstrahl 7 bei angesteuerter durch Aktuatoren gezielt verformbarer Linse 5. Mit Inbetriebnahme des Rotationslasers 1 erzeugt die Laserlichtquelle 3 einen Laserstrahl 7, der über das Umlenkmittel 11 ausgesendet wird. Durch eine Neigung des Geräteköpers des Rotationslasers 1, beispielsweise bedingt durch einen unebenen Untergrund auf einer Baustelle, ist die optische Achse der Sendeeinheit 14 und damit auch die Achse 8 des emittierten Laserstrahls 7 nicht mehr vertikal ausgerichtet und der Laserstrahl 7 wird abweichend von der horizontalen Ebene ausgesandt, wodurch eine unerwünschte, geneigte Laserebene projiziert wird (vgl. Figur 6a). Die Winkelabweichungen der optischen Achse der Sendeeinheit 14 von der horizontalen Achse 20 und/oder der vertikalen Achse 22 werden aber mittels des Neigungssensors 19 erfasst, der beispielsweise in Form von Libellen oder Tilt-Mems ausgebildet sein kann. Die detektierten Winkelabweichungen werden dann an die Steuereinheit 17 übermittelt und durch Manipulation der durch Aktuatoren gezielt verformbaren Linse 5 kompensiert, wie dies in Figur 6b dargestellt ist. Hierfür wird die Achse des Laserstrahls 8 nach 8' ausgerichtet und der Laserstrahl 7 somit horizontal ausgesendet. Die nötige Winkelkorrektur wird also zunächst bestimmt und dann für die weitere Nutzung des Rotationslasers 1 via durch Aktuatoren gezielt verformbarer Linse 5 berücksichtigt, weswegen hier von statischer Manipulation gesprochen wird.

**Figur 7** zeigt eine weitere schematische Darstellung einer statischen Manipulation des Laserstrahls 7 bei einem erfindungsgemässen Rotationslaser 1. Die Laserlichtquelle 3 erzeugt den Laserstrahl 7, der entlang der optischen Achse der Sendeeinheit emittiert und vom Umlenkmittel 11 abgelenkt und ausgesendet wird. Durch eine Ungenauigkeit im optischen System 15, beispielsweise durch Dejustierung einer Linse, bei der es sich um die durch Aktuatoren gezielt verformbare Linse 5 oder eine starre Linse handeln kann, weicht die Achse des Laserstrahls von einer idealen Position 8 auf eine unerwünschte Position 8' ab, was zu einer fehlerhaften Ausrichtung des ausgesendeten Laserstrahls 7 führen würde. Um einen solchen Fehler im optischen System 15 zu detektieren und dann zu kompensieren, kann der Laserstrahl 7 im Strahlengang der der Sendeeinheit 2 durch einen ersten Umlenkspiegel 21, der in den Strahlengang einschwenkbar ist, abgefangen und auf einen Laserdetektor 24 eines zweiten Sensors 23 umgelenkt werden (siehe Fig. 2). Die interne Umlenkung des Laserstrahls 7 auf den Laserdetektor 24 zu Referenzzwecken kann jeweils vor Aussenden des Laserstrahls 7 in die Umgebung oder auch erst nach einer bereits erfolgten Aussendung des Laserstrahls 7 über das Umlenkmittel 11 in die Umgebung stattfinden. Dies auch wiederholt während des Betriebs, wann immer eine Referenzmessung erforderlich scheint. Durch Umlenken des Laserstrahls 7 auf den Laserdetektor 24 werden Winkelabweichungen der Achse des Laserstrahls 8' von der optischen Achse der Sendeeinheit 14 erfasst. Die detektierten Winkelabweichungen werden dann an die Steuereinheit 17 der durch Aktuatoren gezielt verformbaren Linse 5 übermittelt. Die Aktuatoren der gezielt verformbare Linse 5 werden mittels der entsprechend konfigurierten Steuereinheit 17 angesteuert und derart manipuliert, dass der Laserstrahl 7 in der Sendeeinheit 2 mit seiner Achse von der unerwünschten Position 8' auf die ideale Position 8, koaxial zur optischen Achse der Sendeeinheit 14 ausgerichtet wird. Der in seiner Ausrichtung korrigierte Laserstrahl 7 kann nun fehlerfrei ausgesendet werden.

Auf die oben beschriebene Weise können nicht nur Fehler oder Ungenauigkeiten im optischen System 15 des Rotationslasers 1 kompensiert werden. Es wäre beispielsweise auch möglich, temperaturbedingte Geräteabweichungen durch entsprechende Ansteuerung der Aktuatoren der durch Aktuatoren gezielt verformbaren Linse 5 zu kompensieren.

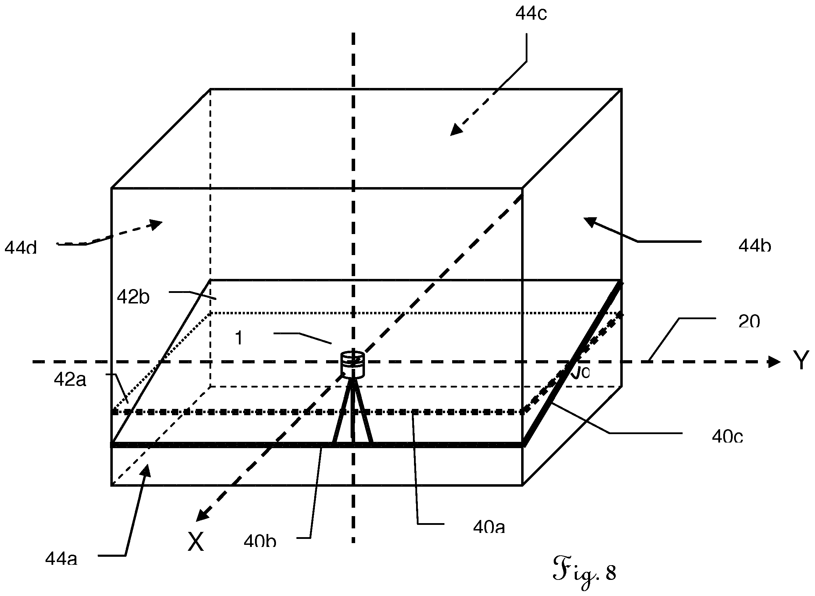

In **Figur 8** ist ein erfindungsgemässer Rotationslaser 1 gezeigt, der eine horizontale Laserebene 42a projiziert, die an allen Seitenwänden 44a-44d des dargestellten Raumes als eine waagerechte Referenzlinie 40a sichtbar ist. Wird nun über die Eingabeeinheit die Steuereinheit derart konfiguriert, dass eine geneigte Laserebene mit einem Neigungswinkel $\alpha$ bezogen auf die X-Richtung des Rotationslasers erzeugt werden soll, so wird unter Verwendung der Neigungsfunktionalität die Ausrichtung des Laserstrahls fortlaufend so nachgeregelt, dass statt der waagerechten Ebene 42a eine geneigte Laserebene 42b erhalten wird. Durch die geneigte Laserebene 42b werden auf den Wänden 44a und 44c waagerechten Referenzlinien 40b erzeugt die gegenüber der Referenzlinie 40a der waagerechten Laserebene 42a einen Versatz nach oben bzw. unten aufweisen und an den seitlichen Seitenwänden 44b und 44d entsprechend um den Winkel $\alpha$ in X-Richtung des Rotationslasers gegen die Horizontale 20 geneigte Referenzlinien 40c erzeugt. Wie gesagt, kann zur Durchführung dieser Funktionalität ein Neigungssollwert für die Laserebene, sprich ein definierter Neigungswinkel $\alpha$ gegenüber der X-Achse des Rotationslasers und/oder ein definierter Neigungswinkel $\beta$ gegenüber der Y-Achse des Rotationslasers beispielsweise über eine Eingabeeinheit 29, die mit der Steuereinheit 17 der durch Aktuatoren gezielt verformbaren Linse 5 gekoppelt ist, eingegeben werden. Die Eingabe kann beispielsweise vor Start der Laserfunktion des Rotationslasers 1 erfolgen, wobei der Start der Laserfunktion des Rotationslasers 1 nicht zwingend mit der Inbetriebnahme des Rotationslasers 1 gleichzusetzen ist, sondern auch erst danach erfolgen kann. Nach Eingabe des Sollwertes in die Eingabeeinheit 29 nimmt der von der Laserlichtquelle 3 erzeugte Laserstrahl 7 durch Manipulation der durch Aktuatoren gezielt verformbaren Linse 5 in Bezug auf die optische Achse der Sendeeinheit 14 einen definierten Winkel ein, so dass eine Laserebene mit Neigung entsprechend des eingegebenen Neigungs-Sollwertes erzeugt wird.

Statt unmittelbar mit der Erzeugung einer geneigten Ebene zu beginnen kann das Gerät auch zunächst eine Selbstkalibrierung durchführen, wobei die Ausrichtung des Laserstrahls bestimmt wird. Die Bestimmung kann mittels der oben genannten Sensoren z.B. des ersten Sensors 19 (Neigungssensor) und/oder des zweiten Sensors 23 (Sensor zur Detektion von "geräteinternen" Abweichungen) erfolgen. Die Ansteuerung der Aktuatoren zur statischen Lasermanipulation, wie sie zur Kompensation von Neigungsfehlern des Geräts oder von Fehlern aufgrund interner Abweichungen nötig sind, werden schliesslich mit den Ansteuersignalen zur Erzeugung der geneigten Ebene überlagert, wodurch die Neigung der Laserebene entsprechend des Neigungs-Sollwertes fehlerfrei eingestellt wird.

Die Eingabe des Sollwertes für die Ausrichtung des Laserstrahls kann auch während des Betriebs erfolgen, wodurch eine flexible Handhabung des Rotationslasers 1 möglich ist.

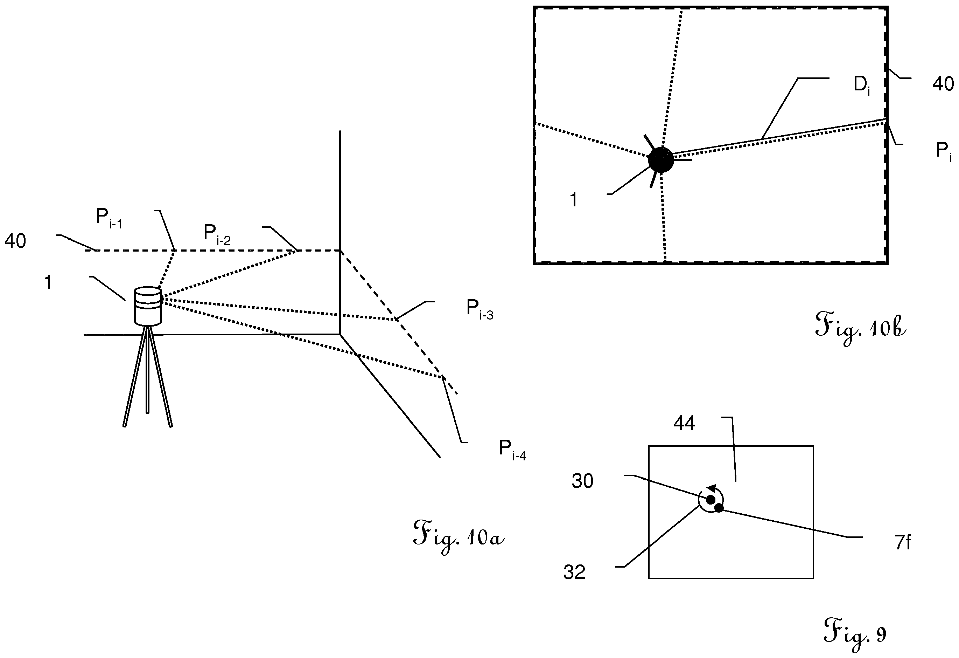

In **Figur 9** ist eine Ausführungsform einer dynamischen Laserstrahlmanipulation bei einem erfindungsgemässen Rotationslaser 1 gezeigt. Durch Manipulation der durch Aktuatoren gezielt verformbaren Linse 5 mittels der Steuereinheit 17 wird der Laserstrahl 7 derart ausgerichtet, dass sich damit Muster 7f auf einer Oberfläche generieren lassen. Dies kann in Koordination mit einer Rotationsbewegung des Umlenkmittels oder mit einem in seiner Position fixierten Umlenkmittel erfolgen. Beispielsweise ist so ein kreisförmiges Abtasten 32 eines Referenzpunktes 30 auf einer Wand 44 möglich. Wie weiter oben bereits ausgeführt, können auf diese Weise z.B. Bohrlöcher an Objekten markiert werden.

Die **Figuren 10a** und **10b** zeigen in perspektivischer Ansicht (Fig. 10a) und in Draufsicht (Fig. 10b) einen erfindungsgemässen Rotationslaser 1, dessen Laserstrahl eine Referenzlinie 40 auf ein Objekt, in diesem Beispiel auf die Wände eines rechteckigen Raumes projiziert. Der Rotationslaser 1 verfügt über eine Entfernungsmesseinheit 25, die einen zweiten Umlenkspiegel 27 und einen Empfänger 28 umfasst (siehe Fig. 2) und möglicherweise auch einen konzentrisch zum Umlenkmittel 11 angeordneten Parabolspiegel. Die Entfernungsmesseinheit kann aber auch auf andere, im Stand der Technik bekannte Weise ausgebildet sein. Mittels der Entfernungsmesseinheit 25 erfolgt während des Betriebs des Rotationslasers 1 eine fortlaufende Entfernungsmessung zu Punkten auf dem Objekt, von denen der Laserstrahl reflektiert wird und die in der Figur 10a beispielhaft mit $P_{i-1}$, $P_{i-2}$, $P_{i-3}$ und $P_{i-4}$ bezeichnet sind. Durch geeignete Manipulation der durch Aktuatoren gezielt verformbaren Linse 5 mittels der Steuereinheit 17, die permanent entsprechend der erhaltenen Distanzwerte nachgeregelt wird, wird eine entfernungsabhängige Divergenzanpassung bzw. Fokusanpassung des Laserstrahls durchgeführt, wodurch ein konstanter Soll-Durchmesser eines durch den Laserstrahl erzeugten Laserstrahlpunktes auf dem Objekt erhalten wird.

Auf diese Weise kann die Schärfe und Sichtbarkeit der Referenzlinie 40 auf dem Objekt nach Belieben eingestellt werden. Der Soll-Durchmesser des Laserstrahlpunktes kann beispielsweise über die Eingabeeinheit 29 oder mittels einer Fernbedienung (nicht dargestellt), die jeweils mit der Steuereinheit 17 der durch Aktuatoren gezielt verformbaren Linse 5 gekoppelt sind, eingegeben werden. Die Eingabe kann vor Start der Laserfunktion des Rotationslasers 1 oder während des Betriebs erfolgen. Nach Eingabe des Soll-Durchmessers wird der von der Laserlichtquelle 3 erzeugte Laserstrahl 7 mittels der durch Aktuatoren gezielt verformbaren Linse 5 entsprechend im Fokus manipuliert und über das Umlenkmittel 11 ausgesendet.

Die entfernungsabhängige Divergenzanpassung bzw. Fokusanpassung des Laserstrahls beim erfindungsgemässen Rotationslaser kann nicht nur im Rotationsbetrieb, sondern auch im Punkt- oder im Linienbetrieb zum Einsatz kommen, wie zum Beispiel bei Pipelasern. Die Steuereinheit kann dabei auch so konfiguriert sein, dass sie die Aktuatoren der wenigstens einen durch Aktuatoren gezielt verformbaren Linse 5 unabhängig von einer Distanzmessung so steuert, dass allein aufgrund einer Eingabe des Nutzers eine bestimmte Divergenz eingestellt wird bzw. ausgehend von der aktuellen Divergenz dieselbe erhöht oder verringert wird.

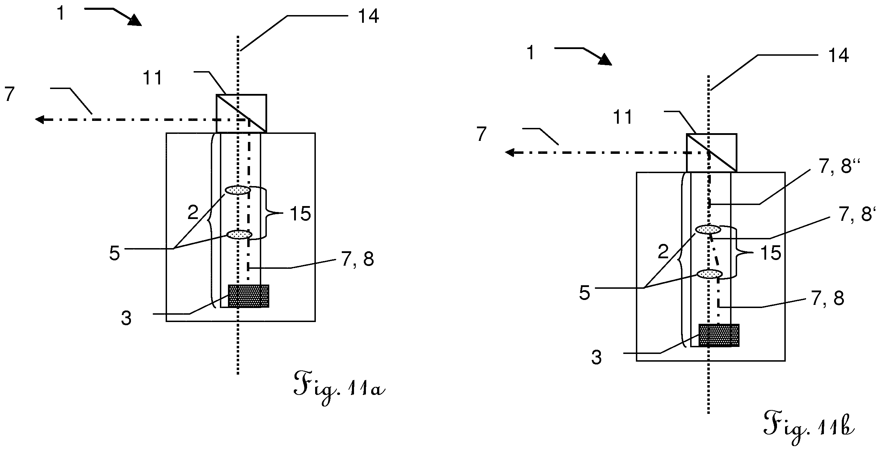

Die **Figuren 11a** und **11b** zeigen eine weitere schematische Darstellung einer statischen Manipulation des Laserstrahls bei einem erfindungsgemässen Rotationslaser. In Figur 11a ist der erfindungsgemässe Rotationslaser 1 mit ausgesendetem Laserstrahl 7 vor Ansteuerung der durch Aktuatoren gezielt verformbaren Linsen 5 dargestellt. Figur 11b zeigt den erfindungsgemässen Rotationslaser 1 mit ausgesendetem Laserstrahl 7 bei angesteuerten durch Aktuatoren gezielt verformbaren Linsen 5. Die Laserlichtquelle 3 erzeugt den Laserstrahl 7, der über das Umlenkmittel 11 ausgesendet wird. Durch eine Ungenauigkeit im Gerät, beispielsweise bedingt durch Dejustierung der Laserlichtquelle 3, kommt es zu einer Translationsabweichung der Achse des Laserstrahls von der optischen Achse der Sendeeinheit 14, d.h. die Achse 8 des emittierten Laserstrahls 7 ist parallel zur optischen Achse der Sendeeinheit 14 verschoben und der Laserstrahl 7 wird mit einem unerwünschten Höhenversatz über das Umlenkmittel 11 ausgesandt (vgl. Figur 11a). Um einen solchen Fehler im Gerät zu kompensieren, kann die Translationsabweichung zunächst mittels eines zweiten Sensors erfasst werden (siehe Fig. 2). Die erfasste Translationsabweichung der Achse des Laserstrahls von der optischen Achse der Sendeeinheit 14 wird dann an die Steuereinheit 17 übermittelt. Durch Manipulation einer ersten durch Aktuatoren gezielt verformbaren Linse 5 mit Hilfe der entsprechend konfigurierten Steuereinheit 17 wird zunächst die Achse des Laserstrahls 8 nach 8' ausgerichtet, wodurch der Laserstrahl 7 in Richtung optische Achse der Sendeeinheit 14 abgelenkt wird. Der Laserstahl 7 trifft auf eine weitere durch Aktuatoren gezielt verformbare Linse 5, die manipuliert mittels der entsprechend konfigurierten Steuereinheit 17 dann die Achse des Laserstrahls 8' nach 8'' ausrichtet, wodurch der Laserstrahl 7 koaxial zur optischen Achse der Sendeeinheit 14 ausgerichtet wird. Die dadurch erzielte Kompensation der Translationsabweichung der Achse des Laserstrahls von der optischen Achse der Sendeeinheit 14 ermöglicht nun die korrekte Aussendung des Laserstrahls 7 ohne unerwünschten Höhenversatz, wie dies in Figur 11b dargestellt ist.

Ist der Versatz permanent und wird dieser vor der Auslieferung des Geräts, z.B. bei der abschliessenden Qualitätskontrolle festgestellt, kann die Grösse des Versatzes bestimmt und als fixer Kalibrierwert im Gerät abgelegt werden. Der Versatz kann dann mittels Steuereinheit während des Betriebs immer durch eine entsprechende Ansteuerung der Aktuatoren der wenigstens einen durch Aktuatoren gezielt verformbaren Linse 5 kompensiert werden und die Messwertrückführung über den Sensor 23 und allenfalls der Sensor 23 im Gerät können eingespart werden.

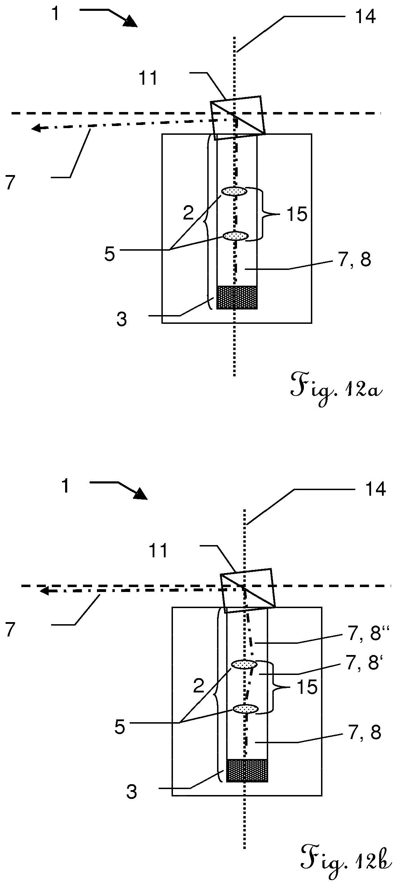

Die **Figuren 12a** und **12b** zeigen eine weitere schematische Darstellung einer statischen Manipulation des Laserstrahls bei einem erfindungsgemässen Rotationslaser. In Figur 12a ist der erfindungsgemässe Rotationslaser 1 mit ausgesendetem Laserstrahl 7 vor Ansteuerung der durch Aktuatoren gezielt verformbaren Linsen 5 dargestellt. Figur 12b zeigt den erfindungsgemässen Rotationslaser 1 mit ausgesendetem Laserstrahl 7 bei angesteuerten Aktuatoren der durch Aktuatoren gezielt verformbaren Linsen 5. Die Laserlichtquelle 3 erzeugt den Laserstrahl 7, der über das Umlenkmittel 11, üblicherweise ein Pentaprisma, das hier schematisch vereinfacht dargestellt ist, ausgesendet wird. Da das Umlenkmittel, einen ankommenden Laserstrahl immer um 90 Grad ablenkt, auch wenn der einfallende Strahl schief auf das Umlenkmittel bzw. Pentaprisma trifft, wird bei einer Schiefstellung des Pentaprismas bzw. des Umlenkmittels, der Laserstrahls mit dem korrekten Winkel umgelenkt, jedoch mit einem Höhenversatz (Fig. 11b). Ebenfalls ein Höhenversatz tritt ein, wenn die mechanische Rotationsachse und die optische Achse des Pentaprismas nicht übereinstimmen oder wenn die komplette Sendeeinheit inkl. Pentaprisma innerhalb des Gehäuses schief steht. Sind die Neigungssensoren (Sensorlibellen, Tilt-Mems) und die mechanische Achse der Sendeeinheit nicht fest miteinander verbunden (immerhin befinden sich Lager und Aufhängung der Libellen dazwischen) kann diese Schiefstellung nicht mittels der Nivellierautomatik erkannt und ausgeglichen werden und es resultiert ebenfalls ein Ausrichtungsfehler. Des Weiteren ist der Laserkollimator über eine mechanische Verbindung mit dem Umlenkmittel verbunden. Selbst wenn die Libellen und das Gerät vor der Auslieferung in einem Kalibrierprozess vermessen werden, wenn der Laserstrahl in der Horizontalen Ebene liegt, und ein ermittelter Kalibrierwert zur ständigen Korrektur verwendet wird, so kann sich doch während des Betriebs temperaturbedingt und alterungsbedingt der Kalibrierwert ändern. Diese Wertänderung führt ebenfalls zu einem Horizontierungsfehler (Plane Error) (vgl. Fig. 12a).

Dieser Horizontierungsfehler (Plane Error) wurde bisher über einen kostenträchtigen Kalibriervorgang / Abgleichvorgang im Service korrigiert. Mit Hilfe der durch Aktuatoren gezielt verformbaren Linse und einer entsprechenden Ansteuerung mittels entsprechend konfigurierter Steuereinheit kann dieser Fehler jedoch direkt und umgehend im Gerät vor Ort korrigiert werden.

Um einen solchen Fehler im Gerät zu kompensieren, kann beispielsweise mittels Manipulation einer ersten durch Aktuatoren gezielt verformbaren Linse 5 die Achse des Laserstrahls 8 nach 8' und mittels Manipulation einer zweiten durch Aktuatoren gezielt verformbaren Linse 5 die Achse des Laserstrahls 8' nach 8'' ausgerichtet werden. Aufgrund der Rotation des Umlenkmittels 11 und eines gegebenenfalls umlaufenden Höhenversatzes des einfallenden Laserstrahls ist eine fortlaufende Nachregelung der Ausrichtung der Achse des Laserstrahls erforderlich, wodurch der Laserstrahl in einer Art Kreiselbewegung auf das Umlenkmittel 11 gesendet wird, so dass der rotierende Laserstrahl 7 vom Umlenkmittel horizontal ausgesendet wird, wie dies in Figur 12b dargestellt ist. Der Horizontierungsfehler/Höhenversatz wird also hoch dynamisch und synchron mit dem sich drehenden Umlenkmittel korrigiert.

Eine andauernde mit dem Umlenkmittel 11 synchronisierte Korrektur kann auch verwendet werden um Winkelfehler/Konusfehler des Umlenkmittels 11 auszugleichen (cone error correction).

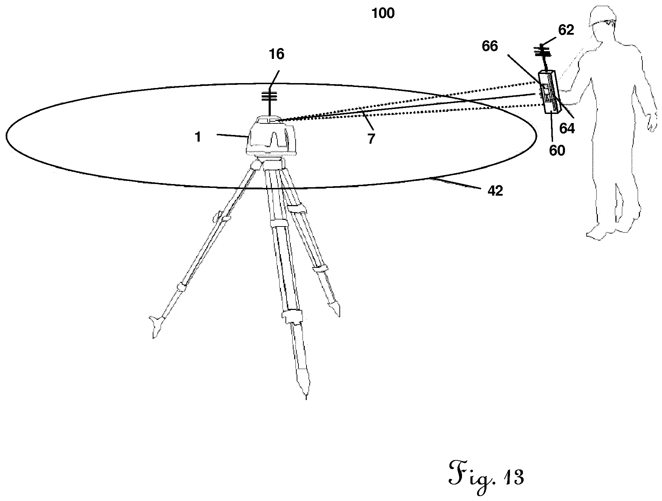

In **Figur 13** ist ein erfindungsgemässes Lasersystem 100 gezeigt mit einem erfindungsgemässen Rotationslaser 1 und einem Laserempfänger 60. Durch rotierende Aussendung des Laserstrahls 7 erzeugt der Rotationslaser 1 eine Laserebene 42. Der Laserempfänger 60, hier als handgehaltener Laserempfänger dargestellt, verfügt über einen Laserstrahl-Detektor 64 zur Detektion des durch den Rotationslaser 1 ausgesendeten Laserstrahls 7. Der Rotationslaser 1 verfügt über einen Datenkommunikations-Empfänger 16 und der Laserempfänger 60 verfügt über einen Datenkommunikatios-Transmitter 62, wodurch eine, insbesondere kabellose, Datenkommunikation zwischen dem Rotationslaser 1 und dem Laserempfänger 60 möglich ist. Um die Divergenz eines auf dem Laserstrahl-Detektor 64 auftreffenden Laserstrahlpunktes entsprechend einem gewünschten Divergenz-Sollwert einstellen zu können, weist der Laserempfänger 60 eine mit dem Laserstrahl-Detektor 64 verbundene Auswerteeinheit auf, die ausserdem mit dem Datenkommunikations-Transmitter 62 verbunden ist. Die Auswerteeinheit des Laserstrahl-Detektors 64 ist derart konfiguriert, dass sie anhand eines auf dem Laserstrahl-Detektor 64 durch den Laserstrahl 7 erzeugten Empfangssignals einen Divergenzstatus des Laserstrahls 7 ermitteln und diesen an den Datenkommunikations-Transmitter 62 übermitteln kann. Der Datenkommunikations-Transmitter 62 wiederum übermittelt den Divergenzstatus dann an den Datenkommunikations-Empfänger 16 des Rotationslasers 1. Der Datenkommunikations-Empfänger 16 des Rotationslasers 1 ist mit der Steuereinheit 17 der durch Aktuatoren gezielt verformbaren Linse 5 gekoppelt. Die Steuereinheit 7 ist derart konfiguriert, dass sie den gewünschten Divergenz-Sollwert mit dem übermittelten Divergenzstatus vergleicht und durch Ansteuern der Aktuatoren der wenigstens einen durch Aktuatoren gezielt verformbaren Linse 5 die Divergenz des Laserstrahls 7 an den gewünschten Divergenz-Sollwert anpasst. Dieser Vorgang kann so oft wiederholt werden bis der Divergenz-Sollwert eingestellt ist. Die Divergenz kann also durch automatisches Nachregeln auf einem stabilen Sollwert gehalten bzw. jederzeit auf diesen oder einen anderen gewünschten Sollwert einjustiert werden.

Der Sollwert kann dabei beispielsweise über eine mit der Steuereinheit 17 gekoppelten Eingabeeinheit 29 oder mittels einer Fernbedienung, die in diesem Fall auch in dem Laserempfänger 60 integriert sein kann, eingegeben werden. Die Datenübertragung von der externen Bedieneinheit/Fernbedienung kann, beispielsweise via Funk, oder Infrarotsignal übermittelt werden. Die Eingabe kann mittels mechanischer Tasten, Touchscreen oder mittels Spracheingabe erfolgen.

Die in den Figuren beschriebenen Anwendungsbeispiele einer erfindungsgemäss durchgeführten Laserstrahlmanipulation können nicht nur einzeln, sondern auch in Kombination miteinander durchgeführt werden.

In den oben gegebenen Ausführungen sind verschiedene Details beispielhaft Einzeln oder in Kombination miteinander gezeigt und/oder beschrieben worden. Dies bedeutet jedoch nicht, dass diese nur in der gezeigten und/oder beschriebenen Form miteinander kombiniert werden können. Der Fachmann weiss, in welcher Weise sich Details der vorangehend gezeigten und/oder beschriebenen Ausführungsformen der Erfindung sinnvoll miteinander kombinieren lassen, auch wenn hier aus Platzgründen nicht alle Kombinationen dargestellt werden konnten.

**Patentansprüche**

1. Rotationslaser (1), mit

   ▪ einer Laserlichtquelle (3) zur Erzeugung eines Laserstrahls (7);
   ▪ einem um eine Rotationsachse (9) drehbaren Umlenkmittel (11) zur gerichteten Aussendung des Laserstrahls (7);
   ▪ einer sich von der Laserlichtquelle (3) bis zum Umlenkmittel (11) erstreckenden Sendeeinheit (2), wobei die Laserlichtquelle (3) Bestandteil der Sendeeinheit (2) ist; und
   ▪ einem optischen System (15) mit einer oder mehreren Linsen zur Manipulation des Laserstrahls (7), wobei wenigstens eine der Linsen eine durch Aktuatoren gezielt verformbare Linse (5) ist,

      • einer Steuereinheit (17) zur Manipulation der entlang des Umfangs der gezielt verformbaren Linse (5) angeordneten Aktuatoren und damit der Linse (5) und ihren optischen Brechungseigenschaften

**dadurch gekennzeichnet, dass**

• die wenigstens eine durch Aktuatoren gezielt verformbare Linse (5) mindestens drei entlang ihres Umfangs verteilt angeordnete und von der Steuereinheit (17) ansteuerbare Aktuatoren (50a, 50b, 50c, 50d, 50e, 50f, 50g, 50h) aufweist, wobei

• die Steuereinheit (17) so konfiguriert ist, dass durch Ansteuern der mindestens drei Aktuatoren (50a, 50b, 50c, 50d, 50e, 50f, 50g, 50h) die optischen Brechungseigenschaften der wenigstens einen durch Aktuatoren gezielt verformbaren Linse (5) in zumindest zwei nicht zusammenfallenden Richtungen ($\pm$51a, $\pm$51b, $\pm$51c, +51d) unterschiedlich variierbar sind bzw. der Laserstrahl (7) in x- und/oder y-Richtung der Linse ausrichtbar ist.

2. Rotationslaser (1) nach Anspruch 1,
**dadurch gekennzeichnet, dass**
eine oder mehrere Linsen des optischen Systems (15)

• in der Sendeeinheit (2) zwischen der Laserlichtquelle (3) und dem Umlenkmittel (11) angeordnet sind und/oder

• derart angeordnet sind, dass sie bei Rotation des Umlenkmittels (11) mit diesem um die Rotationsachse (9) mitrotieren und/oder

• dem Umlenkmittel (11) nachgeordnet sind.

3. Rotationslaser (1) nach Anspruch 1 oder 2,
**dadurch gekennzeichnet, dass**
die Steuereinheit (17) so konfiguriert ist, dass durch Ansteuern der mindestens drei Aktuatoren (50a, 50b, 50c, 50d, 50e, 50f, 50g, 50h) der wenigstens einen durch Aktuatoren gezielt verformbaren Linse (5) der Laserstrahl (7) mit einem Versatz in x- und/oder y-Richtung der Linse aussendbar ist.

4. Rotationslaser (1) nach einem der Ansprüche 1 bis 3,
**dadurch gekennzeichnet, dass**
die Steuereinheit (17) so konfiguriert ist, dass durch Ansteuern der mindestens drei Aktuatoren (50a, 50b, 50c, 50d, 50e, 50f, 50g, 50h) der wenigstens einen durch Aktuatoren gezielt verformbaren Linse (5) der Querschnitt des Laserstrahls (7) in seiner geometrischen Form veränderbar ist.

5. Rotationslaser (1) nach einem der Ansprüche 1 bis 4,
**dadurch gekennzeichnet, dass**
die Steuereinheit (17) so konfiguriert ist, dass durch Ansteuern der mindestens drei Aktuatoren (50a, 50b, 50c, 50d, 50e, 50f, 50g, 50h) der wenigstens einen durch Aktuatoren gezielt verformbaren Linse (5) der Laserstrahl (7) statisch und/oder dynamisch manipulierbar ist.

6. Rotationslaser (1) nach einem der Ansprüche 1 bis 5,
**dadurch gekennzeichnet, dass**
ein erster Sensor (19) zum Erfassen von Winkelabweichungen der optischen Achse der Sendeeinheit (14) von der horizontalen Ebene (20) und/oder vertikalen Ebene (22) vorhanden ist, wobei der erste Sensor (19) mit der Steuereinheit (17) gekoppelt ist, und die Steuereinheit (17) so konfiguriert ist, dass basierend auf der vom ersten Sensor (19) detektierten Winkelabweichungdurch Ansteuern der mindestens drei Aktuatoren (50a, 50b, 50c, 50d, 50e, 50f, 50g, 50h) der wenigstens einen durch Aktuatoren gezielt verformbaren Linse (5) eine durch die Winkelabweichungen der optischen Achse der Sendeeinheit (14) verursachte Abweichung der Ausrichtung des Laserstrahls (7) kompensierbar ist.

7. Rotationslaser (1) nach einem der Ansprüche 1 bis 6,
**dadurch gekennzeichnet, dass**
ein zweiter Sensor (23) zum Erfassen von Winkelabweichungen und/oder Translationsabweichungen der Achse des Laserstrahls (8, 8') von der optischen Achse der Sendeeinheit (14) vorhanden ist, wobei der zweite Sensor (23) mit der Steuereinheit (17) gekoppelt ist, und die Steuereinheit (17) so konfiguriert ist, dass basierend auf der vom zweiten Sensor (23) detektierten Winkelabweichungen und/oder Translationsabweichungen durch Ansteuern der mindestens drei Aktuatoren (50a, 50b, 50c, 50d, 50e, 50f, 50g, 50h) der wenigstens einen durch Aktuatoren gezielt verformbaren Linse (5) die Winkelabweichungen und/oder Translationsabweichungen der Achse des Laserstrahls (8, 8') von der optischen Achse der Sendeeinheit kompensierbar sind.

8. Rotationslaser (1) nach einem der Ansprüche 1 bis 7,
**dadurch gekennzeichnet, dass**
eine Entfernungsmesseinheit (25) vorhanden ist zum Messen von Entfernungen zu Punkten (Pi, $P_{i-1}$, $P_{i-2}$, $P_{i-3}$, $P_{i-4}$) auf einem Objekt, an dem der Laserstrahl (7) reflektiert wird, wobei die Entfernungsmesseinheit (25) mit der Steuereinheit (17) gekoppelt ist, und die Steuereinheit (17) so konfigurierbar ist, dass basierend auf der von der Entfernungsmesseinheit (25) gemessenen Entfernungen ($D_i$) durch Ansteuern der mindestens drei Aktuatoren (50a, 50b, 50c, 50d, 50e, 50f, 50g, 50h) der wenigstens einen durch Aktuatoren gezielt verformbaren Linse (5) eine entfernungsabhängige Divergenz des Laserstrahls so einstellbar ist, dass ein konstanter Soll-Durchmesser eines durch den Laserstrahl erzeugten Laserstrahlpunktes auf dem Objekt erhältlich ist.

9. Rotationslaser (1) nach einem der Ansprüche 1 bis 8,
**dadurch gekennzeichnet, dass** die Steuereinheit (17) mittels einer am Rotationslaser (1) befindlichen Eingabeeinheit (29) und/oder einer externen Bedieneinheit und/oder Spracheingabe konfigurierbar ist, insbesondere durch Eingabe eines Sollwertes für die Ausrichtung des Laserstrahls (7) und/oder den translatorischen Versatz und/oder die geometrische Form des Querschnitts des Laserstrahls (7) und/oder die Neigung der vom Laserstrahl (7) erzeugten Laserebene und/oder den Durchmesser des Laserstrahlpunktes auf einem vom Laserstrahl (7) getroffenen Objekt.

10. Lasersystem umfassend einen Rotationslaser (1) und einem Laserempfänger, wobei der Rotationslaser (1) einen Datenkommunikations-Empfänger aufweist, und der Laserempfänger eine Datenkommunikations-Transmitter und eine mit diesem verbundene Auswerteeinheit, sowie einen mit der Auswerteeinheit verbundenen Laserstrahl-Detektor
**dadurch gekennzeichnet, dass**

   ▪ der Rotationslaser ein Rotationslaser (1) nach einem der Ansprüche 1 bis 9 ist,
   ▪ die Auswerteeinheit des Laserempfängers derart konfiguriert ist, dass sie anhand eines auf dem Laserstrahl-Detektor durch den Laserstrahl des Rotationslasers (1) erzeugten Empfangssignals einen Divergenzstatus des Laserstrahls ermittelt und diesen mittels des Datenkommunikations-Transmitters an den Datenkommunikations-Empfänger des Rotationslasers (1) übermittelt
   ▪ der Datenkommunikations-Empfänger des Rotationslasers (1) mit der Steuereinheit (17) der durch Aktuatoren gezielt verformbaren Linse (5) gekoppelt ist, und die Steuereinheit (17) derart konfiguriert ist, dass sie einen Divergenz-Sollwert mit dem übermittelten Diverenzstatus vergleicht und durch Ansteuern der mindestens drei Aktuatoren (50a, 50b, 50c, 50d, 50e, 50f, 50g, 50h) der wenigstens einen durch Aktuatoren gezielt verformbaren Linse (5) die Divergenz des Laserstrahls (7) an den Divergenz-Sollwert anpasst.

11. Verfahren zur Manipulation eines Laserstrahls (7) durchführbar mit einem Rotationslaser (1) nach einem der Ansprüche 1 bis 9,
**dadurch gekennzeichnet, dass**
optische Brechungseigenschaften wenigstens einer durch Aktuatoren gezielt verformbaren Linse (5), die mindestens drei entlang ihres Umfangs verteilt angeordnete, ansteuerbare Aktuatoren (50a, 50b, 50c, 50d) aufweist, durch Ansteuern der Aktuatoren (50a, 50b, 50c, 50d) mittels einer Steuereinheit (17) derart variiert werden, dass der Laserstrahl (7) in seiner Ausrichtung bezüglich x- und/oder y-Richtung manipuliert wird und/oder mit einem Versatz in x- und/oder y-Richtung ausgesendet wird.

12. Verfahren nach Anspruch 11,
**dadurch gekennzeichnet, dass**
es folgende Schritte umfasst:

   ▪ Erzeugen des Laserstrahls (7);
   ▪ Umlenken des Laserstrahls (7) in der Sendeeinheit (2) auf einen Laserdetektor (24) eines zweiten Sensors (23) zum Erfassen von Winkelabweichungen und/oder Translationsabweichungen der Achse des Laserstrahls (8, 8') von der optischen Achse der Sendeeinheit (14);
   ▪ Kompensieren der Winkelabweichungen und/oder der Translationsabweichungen durch Ansteuern der mindestens drei Aktuatoren (50a, 50b, 50c, 50d, 50e, 50f, 50g, 50h) der wenigstens einen durch Aktuatoren gezielt verformbaren Linse (5) mittels der Steuereinheit (17), wodurch der Laserstrahl (7) koaxial zur optischen Achse der Sendeeinheit (14) ausgerichtet wird; und
   ▪ Aussenden des Laserstrahls (7).

13. Verfahren nach Anspruch 11,
**dadurch gekennzeichnet, dass**
es folgende Schritte umfasst:

   ▪ Erzeugen des Laserstrahls (7);
   ▪ Aussenden des Laserstrahls (7);
   ▪ Erfassen von Winkelabweichungen der optischen Achse der Sendeeinheit (14) von der horizontalen Achse (20) und/oder vertikalen Achse (22); und
   ▪ Kompensieren der Winkelabweichungen durch Ansteuern der mindestens drei Aktuatoren (50a, 50b, 50c, 50d, 50e, 50f, 50g, 50h) der wenigstens einen durch Aktuatoren gezielt verformbaren Linse (5) mittels der Steuereinheit (17), wodurch der Laserstrahl (7) horizontal oder vertikal ausgerichtet wird.

14. Verfahren nach Anspruch 11,
**dadurch gekennzeichnet, dass**
es folgende Schritte umfasst:

   ▪ Eingeben eines Neigungs-Sollwertes einer durch den Laserstrahl (7) zu erzeugenden Laserebene;
   ▪ Erzeugen des Laserstrahls (7);
   ▪ Ansteuern der mindestens drei Aktuatoren (50a, 50b, 50c, 50d, 50e, 50f, 50g, 50h) der wenigstens einen durch Aktuatoren gezielt verformbaren Linse (5) mittels der Steuereinheit (17) derart, dass der Laserstrahl (7) in Bezug auf die optische Achse der Sendeeinheit (14) einen definierten Winkel einnimmt, so dass eine Laserebene mit Neigung entsprechend des eingegebenen Neigungs-Sollwertes erzeugt wird.

**15.** Verfahren nach wenigstens einem der Ansprüche 11 bis 14,
**dadurch gekennzeichnet, dass**
die Verfahren nach den Ansprüchen 12 und/oder 13 und/oder 14 in Kombination miteinander durchgeführt werden.

**16.** Computerprogrammprodukt mit Programmcode, der auf einem maschinenlesbaren Träger gespeichert ist, oder Computer-Daten-Signal, verkörpert durch eine elektromagnetische Welle, zur Durchführung eines Verfahrens nach einem der Ansprüche 11 bis 15, insbesondere ausgeführt in einer Steuereinheit (17) eines Rotationslasers nach einem der Ansprüche 1 bis 9.

**Claims**

**1.** Rotation laser (1), comprising

- a laser light source (3) for generating a laser beam (7);
- a deflection means (11) rotatable about a rotation axis (9) and serving for the directional emission of the laser beam (7);
- a transmitting unit (2) extending from the laser light source (3) as far as the deflection means (11), wherein the laser light source (3) is part of the transmitting unit (2); and
- an optical system (15) comprising one or a plurality of lenses for manipulating the laser beam (7), wherein at least one of the lenses is a lens (5) which is deformable in a targeted manner by actuators,
- a control unit (17) for manipulating the actuators which are arranged along a circumference of the lens (5) which is deformable in a targeted manner, and thereby for manipulating the lens (5) and its optical refraction properties,

**characterized in that**

- the at least one lens (5) which is deformable in a targeted manner by actuators has at least three actuators (50a, 50b, 50c, 50d, 50e, 50f, 50g, 50h) which are drivable by the control unit (17) and which are arranged in a manner distributed along a circumference of the lens (5) which is deformable, wherein
- the control unit (17) is configured such that, by driving the at least three actuators (50a, 50b, 50c, 50d, 50e, 50f, 50g, 50h), the optical refraction properties of the at least one lens (5) which is deformable in a targeted manner by actuators are variable differently in at least two non-coin-

ciding directions ($\pm$51a, $\pm$51b, $\pm$51c, $\pm$51d) or the laser beam (7) is orientable in the x- and/or y-direction of the lens.

**2.** Rotation laser (1) according to Claim 1,
**characterized in that**
one or a plurality of lenses of the optical system (15)

- are arranged in the transmitting unit (2) between the laser light source (3) and the deflection means (11) and/or
- are arranged in such a way that they concomitantly rotate upon rotation of the deflection means (11) with the latter about the rotation axis (9) and/or
- are disposed downstream of the deflection means (11).

**3.** Rotation laser (1) according to Claim 1 or 2,
**characterized in that**
the control unit (17) is configured such that, by driving the at least three actuators (50a, 50b, 50c, 50d, 50e, 50f, 50g, 50h) of the at least one lens (5) which is deformable in a targeted manner by actuators, the laser beam (7) can be emitted with an offset in the x- and/or y-direction of the lens.

**4.** Rotation laser (1) according to any one of Claims 1 to 3,
**characterized in that**
the control unit (17) is configured such that, by driving the at least three actuators (50a, 50b, 50c, 50d, 50e, 50f, 50g, 50h) of the at least one lens (5) which is deformable in a targeted manner by actuators, the cross section of the laser beam (7) is variable in terms of its geometrical shape.

**5.** Rotation laser (1) according to any one of Claims 1 to 4,
**characterized in that**
the control unit (17) is configured such that, by driving the at least three actuators (50a, 50b, 50c, 50d, 50e, 50f, 50g, 50h) of the at least one lens (5) which is deformable in a targeted manner by actuators, the laser beam (7) is manipulatable statically and/or dynamically.

**6.** Rotation laser (1) according to any one of Claims 1 to 5,
**characterized in that**
a first sensor (19) for detecting angular deviations of the optical axis of the transmitting unit (14) from the horizontal plane (20) and/or vertical plane (22) is present, wherein the first sensor (19) is coupled to the control unit (17), and the control unit (17) is configured that, based on the angular deviations detected by the first sensor (19), by driving the at least three actuators (50a, 50b, 50c, 50d, 50e, 50f, 50g, 50h) of the at least one lens (5) which is deformable in a targeted manner by actuators, a deviation of the orientation of the laser beam (7) that is caused by the angular deviations of the optical axis of the transmitting unit (14) can be compensated for.

7. Rotation laser (1) according to any one of Claims 1 to 6, **characterized in that**
   a second sensor (23) for detecting angular deviations and/or translational deviations of the axis of the laser beam (8, 8') from the optical axis of the transmitting unit (14) is present, wherein the second sensor (23) is coupled to the control unit (17), and the control unit (17) is configured that, based on the angular deviations and/or translational deviations detected by the second sensor (23), by driving the at least three actuators (50a, 50b, 50c, 50d, 50e, 50f, 50g, 50h) of the at least one lens (5) which is deformable in a targeted manner by actuators, the angular deviations and/or translational deviations of the axis of the laser beam (8, 8') from the optical axis of the transmitting unit can be compensated for.

8. Rotation laser (1) according to any one of Claims 1 to 7, **characterized in that**
   a distance measuring unit (25) is present for measuring distances to points ($P_i$, $P_{i-1}$, $P_{i-2}$, $P_{i-3}$, $P_{i-4}$) on an object at which the laser beam (7) is reflected, wherein the distance measuring unit (25) is coupled to the control unit (17), and the control unit (17) is configurable such that based on the distances ($D_i$) measured by the distance measuring unit (25), by driving the at least three actuators (50a, 50b, 50c, 50d, 50e, 50f, 50g, 50h) of the at least one lens (5) which is deformable in a targeted manner by actuators, a distance-dependent divergence of the laser beam is settable such that a constant desired diameter of a laser beam point generated by the laser beam on the object is obtainable.

9. Rotation laser (1) according to any one of Claims 1 to 8, **characterized in that** the control unit (17) is configurable by means of an input unit (29) situated on the rotation laser (1) and/or by means of an external operating unit and/or voice input, in particular by the inputting of a desired value for the orientation of the laser beam (7) and/or the translational offset and/or the geometrical shape of the cross section of the laser beam (7) and/or the inclination of the laser plane generated by the laser beam (7) and/or the diameter of the laser beam point on an object impinged on by the laser beam (7).

10. Laser system comprising a rotation laser (1) and a laser receiver, wherein the rotation laser (1) has a data communication receiver, and the laser receiver has a data communication transmitter and an evaluation unit connected thereto, and comprising a laser beam detector connected to the evaluation unit, **characterized in that**

    - the rotation laser is a rotation laser (1) according to any one of Claims 1 to 9,
    - the evaluation unit of the laser receiver is configured in such a way that it ascertains a divergence status of the laser beam on the basis of a reception signal generated on the laser beam detector by the laser beam of the rotation laser (1) and communicates said divergence status to the data communication receiver of the rotation laser (1) by means of the data communication transmitter,
    - the data communication receiver of the rotation laser (1) is coupled to the control unit (17) of the lens (5) which is deformable in a targeted manner by actuators, and the control unit (17) is configured in such a way that it compares a desired divergence value with the communicated divergence status and, by driving the at least three actuators (50a, 50b, 50c, 50d, 50e, 50f, 50g, 50h) of the at least one lens (5) which is deformable in a targeted manner by actuators, adapts the divergence of the laser beam (7) to the desired divergence value.

11. Method for manipulating a laser beam (7) implementable by a rotation laser (1) according to any one of Claims 1 to 9,
    **characterized in that**
    optical refraction properties of at least one lens (5) which is deformable in a targeted manner by actuators, and which has at least three drivable actuators (50a, 50b, 50c, 50d) arranged in a manner distributed along the circumference of said at least one lens are varied by driving the actuators (50a, 50b, 50c, 50d) by means of a control unit (17) in such a way that the laser beam (7) is manipulated in terms of its orientation with respect to the x- and/or y-direction and/or is emitted with an offset in the x- and/or y-direction.

12. Method according to Claim 11,
    **characterized in that**
    it comprises the following steps:

    - generating the laser beam (7);
    - deflecting the laser beam (7) in the transmitting unit (2) onto a laser detector (24) of a second sensor (23) for detecting angular deviations and/or translational deviations of the axis of the laser beam (8, 8') from the optical axis of the transmitting unit (14);
    - compensating for the angular deviations and/or the translational deviations by driving the at least three actuators (50a, 50b, 50c, 50d, 50e, 50f, 50g, 50h) of the at least one lens (5) which is deformable in a targeted manner by actuators by means of the control unit (17), as a result of which the laser beam (7) is oriented coaxially with respect to the optical axis of the transmitting unit (14); and

- emitting the laser beam (7).

**13.** Method according to Claim 11, **characterized in that** it comprises the following steps:

- generating the laser beam (7);
- emitting the laser beam (7);
- detecting angular deviations of the optical axis of the transmitting unit (14) from the horizontal axis (20) and/or vertical axis (22); and
- compensating for the angular deviations by driving the at least three actuators (50a, 50b, 50c, 50d, 50e, 50f, 50g, 50h) of the at least one lens (5) which is deformable in a targeted manner by actuators by means of the control unit (17), as a result of which the laser beam (7) is oriented horizontally or vertically.

**14.** Method according to Claim 11, **characterized in that** it comprises the following steps:

- inputting a desired inclination value of a laser plane to be generated by the laser beam (7);
- generating the laser beam (7);
- driving the at least three actuators (50a, 50b, 50c, 50d, 50e, 50f, 50g, 50h) of the at least one lens (5) which is deformable in a targeted manner by actuators by means of the control unit (17) in such a way that the laser beam (7) assumes a defined angle in relation to the optical axis of the transmitting unit (14), such that a laser plane with inclination corresponding to the desired inclination value input is generated.

**15.** Method according to at least one of Claims 11 to 14, **characterized in that** the methods according to Claims 12 and/or 13 and/or 14 are implemented in combination with one another.

**16.** Computer program product comprising program code stored on a machine-readable carrier, or a computer data signal, embodied by an electromagnetic wave, for implementing a method according to any one of Claims 11 to 15, in particular performed in a control unit (17) of a rotation laser according to any one of Claims 1 to 9.

**Revendications**

**1.** Laser rotatif (1) avec

- une source de lumière laser (3) pour produire un faisceau laser (7) ;
- un moyen de déviation (11) rotatif autour d'un axe de rotation (9) pour l'émission orientée du faisceau laser (7) ;
- une unité d'émission (2) qui s'étend de la source de lumière laser (3) jusqu'au moyen de déviation (11), cependant que la source de lumière laser (3) est un composant de l'unité d'émission (2) et
- un système optique (15) avec une ou plusieurs lentilles pour la manipulation du faisceau laser (7), cependant qu'au moins une des lentilles est une lentille déformable (5) de manière ciblée par des actionneurs,
- une unité de commande (17) pour la manipulation des actionneurs placés le long de la circonférence de la lentille déformable (5) de manière ciblée et donc de la lentille (5) et de ses propriétés de diffraction optique,

**caractérisé en ce que**

- la lentille (5) qui existe au moins déformable de manière ciblée par des actionneurs présente au moins trois actionneurs (50a, 50b, 50c, 50d, 50e, 50f, 50g, 50h) placés en étant répartis le long de sa circonférence et pouvant être commandés par l'unité de commande (17), cependant que
• l'unité de commande (17) est configurée de telle manière que, par la commande des trois actionneurs qui existent au moins (50a, 50b, 50c, 50d, 50e, 50f, 50g, 50h), les propriétés de diffraction optique de la lentille (5) qui existe au moins, déformable de manière ciblée par des actionneurs, peuvent être variées de manière différenciée dans au moins deux directions qui ne coïncident pas (±51a, ±51b, ±51c, ±51d) ou que le faisceau laser (7) peut être orienté dans la direction x et/ou la direction y de la lentille.

**2.** Laser rotatif (1) selon la revendication 1, **caractérisé en ce qu'**une ou plusieurs lentilles du système optique (15)

- sont placées dans l'unité d'émission (2) entre la source de lumière laser (3) et le moyen de déviation (11) et/ou
- sont placées de telle manière qu'elles sont en rotation avec le moyen de déviation (11) autour de l'axe de rotation (9) lors de rotation de celui-ci et/ou
• sont placées en aval du moyen de déviation (11).

**3.** Laser rotatif (1) selon la revendication 1 ou 2, **caractérisé en ce que** l'unité de commande (17) est configurée de telle manière que, par la commande des trois actionneurs qui existent au moins (50a, 50b, 50c, 50d, 50e, 50f, 50g, 50h) de la lentille (5) qui existe au moins, déformable de manière ciblée par des actionneurs, le faisceau laser (7) peut être émis avec un décalage dans la direction x et/ou la direction y de la lentille.

**4.** Laser rotatif (1) selon l'une des revendications 1 à 3, **caractérisé en ce que**, par la commande des trois actionneurs qui existent au moins (50a, 50b, 50c, 50d, 50e, 50f, 50g, 50h) de la lentille (5) qui existe au moins, déformable de manière ciblée par des actionneurs, la forme géométrique de la section transversale du faisceau laser (7) peut varier.

**5.** Laser rotatif (1) selon l'une des revendications 1 à 4, **caractérisé en ce que**, par la commande des trois actionneurs qui existent au moins (50a, 50b, 50c, 50d, 50e, 50f, 50g, 50h) de la lentille (5) qui existe au moins, déformable de manière ciblée par des actionneurs, le faisceau laser (7) peut être manipulé de manière statique et/ou dynamique.

**6.** Laser rotatif (1) selon l'une des revendications 1 à 5, **caractérisé en ce qu'**il existe un premier capteur (19) pour détecter des écarts angulaires de l'axe optique de l'unité d'émission (14) par rapport au plan horizontal (20) et/ou au plan vertical (22), cependant que le premier capteur (19) est couplé à l'unité de commande (17) et l'unité de commande (17) est configurée de telle manière que, sur la base des écarts angulaires détectés par le premier capteur (19), par la commande des trois actionneurs qui existent au moins (50a, 50b, 50c, 50d, 50e, 50f, 50g, 50h) de la lentille (5) qui existe au moins, déformable de manière ciblée par des actionneurs, un écart de l'orientation du faisceau laser (7) causé par les écarts angulaires de l'axe optique de l'unité d'émission (14) peut être compensé.

**7.** Laser rotatif (1) selon l'une des revendications 1 à 6, **caractérisé en ce qu'**il existe un second capteur (23) pour détecter des écarts angulaires et/ou des écarts de translation de l'axe du faisceau optique (8, 8') de l'axe optique de l'unité d'émission (14), le second capteur (23) étant couplé à l'unité de commande (17) et l'unité de commande (17) étant configurée de telle manière que, sur la base des écarts angulaires détectés par le second capteur (23), par la commande des trois actionneurs qui existent au moins (50a, 50b, 50c, 50d, 50e, 50f, 50g, 50h) de la lentille (5) qui existe au moins, déformable de manière ciblée par des actionneurs, les écarts angulaires et/ou les écarts de translation de l'axe du faisceau optique (8, 8') de l'axe optique de l'unité d'émission peuvent être compensés.

**8.** Laser rotatif (1) selon l'une des revendications 1 à 7, **caractérisé en ce qu'**il existe une unité de mesure de la distance (25) pour mesurer des distances par rapport à des points ($P_i$, $P_{i-1}$, $P_{i-2}$, $P_{i-3}$, $P_{i-4}$) sur un objet sur lequel le faisceau laser (7) est réfléchi, cependant que l'unité de mesure de la distance (25) est couplée à l'unité de commande (17) et l'unité de commande (17) est configurée de telle manière que, sur la base des distances ($D_i$) mesurées par l'unité de mesure de la distance (25), par la commande des trois actionneurs qui existent au moins (50a, 50b, 50c, 50d, 50e, 50f, 50g, 50h) de la lentille (5) qui existe au moins déformable, de manière ciblée par des actionneurs, une divergence du faisceau laser qui dépend de la distance peut être réglée de telle manière que l'on peut obtenir un diamètre nominal constant d'un point du faisceau laser produit par le faisceau laser sur l'objet.

**9.** Laser rotatif (1) selon l'une des revendications 1 à 8, **caractérisé en ce que** l'unité de commande (17) peut être configurée au moyen d'une unité d'entrée (29) qui se trouve sur le laser rotatif (1) et/ou d'une unité de commande externe et/ou d'une commande vocale, en particulier par l'entrée d'une valeur de consigne pour l'orientation du faisceau laser (7) et/ou le décalage en translation et/ou la forme géométrique de la section transversale du faisceau laser (7) et/ou l'inclinaison du plan laser produit par le faisceau laser (7) et/ou le diamètre du point de faisceau laser sur un objet touché par le faisceau laser (7).

**10.** Système laser comprenant un laser rotatif (1) et un récepteur laser, cependant que le laser rotatif (1) présente un récepteur de communication de données et le récepteur laser présente un émetteur de communication de données et une unité d'évaluation reliée à celui-ci ainsi qu'un détecteur de faisceau laser relié à l'unité d'évaluation, **caractérisé en ce que**

- le laser rotatif est un laser rotatif (1) selon l'une des revendications 1 à 9,
- l'unité d'évaluation du récepteur laser est configurée de telle manière qu'elle détecte, à l'aide d'un signal de réception produit sur le détecteur de faisceau laser par le faisceau laser du laser rotatif (1), un état de divergence du faisceau laser et transmet celui-ci au moyen de l'émetteur de communication de données au récepteur de communication de données du laser rotatif (1),
- le récepteur de communication de données du laser rotatif (1) est couplé à l'unité de commande (17) de la lentille (5) déformable de manière ciblée par des actionneurs et l'unité de commande (17) est configurée de telle manière qu'elle compare une valeur nominale de divergence à l'état de divergence transmis et, par la commande des trois actionneurs qui existent au moins (50a, 50b, 50c, 50d, 50e, 50f, 50g, 50h) de la lentille (5) qui existe au moins, déformable de manière ciblée par des actionneurs, adapte la divergence du faisceau laser (7) à la valeur nominale de divergence.

11. Procédé pour la manipulation d'un faisceau laser (7) qui peut être exécuté avec un laser rotatif (1) selon l'une des revendications 1 à 9, **caractérisé en ce que** des propriétés de diffraction optique d'au moins une lentille (5) déformable de manière ciblée par des actionneurs (50a, 50b, 50c, 50d, 50e, 50f, 50g, 50h) placés en étant répartis le long de sa circonférence sont variées par la commande des actionneurs (50a, 50b, 50c, 50d) au moyen d'une unité de commande (17) de telle manière que le faisceau laser (7) est manipulé dans son orientation par rapport à la direction x et/ou y et/ou est émis avec un décalage dans la direction x et/ou y.

12. Procédé selon la revendication 11, **caractérisé en ce qu'**il comprend les étapes suivantes :

   ▪ production du faisceau laser (7) ;
   ▪ déviation du faisceau laser (7) dans l'unité d'émission (2) sur un détecteur laser (24) d'un second capteur (23) pour détecter des écarts angulaires et/ou les écarts de translation de l'axe du faisceau optique (8, 8') de l'axe optique de l'unité d'émission (14) ;
   ▪ compensation des écarts angulaires et/ou des écarts de translation par la commande des trois actionneurs qui existent au moins (50a, 50b, 50c, 50d, 50e, 50f, 50g, 50h) de la lentille (5) qui existe au moins au moyen de l'unité de commande (17) si bien que le faisceau laser (7) est orienté de manière coaxiale par rapport à l'axe optique de l'unité d'émission (14) et
   ▪ émission du faisceau laser (7).

13. Procédé selon la revendication 11, **caractérisé en ce qu'**il comprend les étapes suivantes :

   ▪ production du faisceau laser (7) ;
   ▪ émission du faisceau laser (7) ;
   ▪ détection d'écarts angulaires de l'axe optique de l'unité d'émission (14) par rapport à l'axe horizontal (20) et/ou à l'axe vertical (22) et
   ▪ compensation des écarts angulaires par la commande des trois actionneurs qui existent au moins (50a, 50b, 50c, 50d, 50e, 50f, 50g, 50h) de la lentille (5) qui existe au moins au moyen de l'unité de commande (17) si bien que le faisceau laser (7) est orienté horizontalement ou verticalement.

14. Procédé selon la revendication 11, **caractérisé en ce qu'**il comprend les étapes suivantes :

   ▪ entrée d'une valeur nominale d'inclinaison d'un plan laser devant être produit par le faisceau laser (7) ;
   ▪ production du faisceau laser (7) ;
   ▪ excitation des trois actionneurs qui existent au moins (50a, 50b, 50c, 50d, 50e, 50f, 50g, 50h) de la lentille (5) qui existe au moins au moyen de l'unité de commande (17) de telle manière que le faisceau laser (7) prend un angle défini par rapport à l'axe optique de l'unité d'émission (14) de telle manière qu'un plan laser est produit avec une inclinaison correspondant à la valeur nominale d'inclinaison entrée.

15. Procédé selon au moins l'une des revendications 11 à 14, **caractérisé en ce que** les procédés selon les revendications 12 et/ou 13 et/ou 14 sont exécutés en combinaison l'un avec l'autre.

16. Produit programme d'ordinateur avec code de programme qui est mémorisé sur un support lisible par machine ou signal de données d'ordinateur, matérialisé par une onde électromagnétique, pour l'exécution d'un procédé selon l'une des revendications 11 à 15, en particulier réalisé dans une unité de commande (17) d'un laser rotatif selon l'une des revendications 1 à 9.

Fig. 1

Fig. 2

Fig. 4

Fig. 3a

Fig. 3b

Fig. 5

Fig. 7

Fig. 6a

Fig. 6b

44c

44d

44b

42b

20

42a

1

Y

Jo

40c

X    40b    40a

44a

**Fig. 8**

EP 2 789 973 B1

26

*Fig. 10b*

*Fig. 9*

*Fig. 10a*

Fig. 11a

Fig. 11b

EP 2 789 973 B1

EP 2 789 973 B1

*Fig. 12a*

*Fig. 12b*

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6253457 B
- US 5825555 A
- WO 2008095923 A
- US 5239414 A